# EUROPEAN PATENT APPLICATION

(11) **EP 4 841 910 A1**
(43) Date of publication of application: **18.11.2026**
(21) Application number: 24916717.2
(22) Date of filing: 23.12.2024
(51) Int. Cl.: H04B 7/185, H04W 84/06

(54) **COMMUNICATION METHOD, COMMUNICATION APPARATUS, AND STORAGE MEDIUM**

(30) Priority: 11.01.2024 CN 202410044975
(71) Applicant: Datang Mobile Communications Equipment Co., Ltd., Beijing 100085 (CN)
(72) Inventor: LIU, Yingying, Beijing 100085 (CN); WAN, Qing, Beijing 100085 (CN); WANG, Hucheng, Beijing 100085 (CN)
(74) Representative: Studio Torta S.p.A.
(86) International application number: PCT/CN2024/141511
(87) International publication number: WO 2025/148670

(57) **Abstract**

The present disclosure relates to a communication method and apparatus, and a storage medium. The method comprises: a terminal sending a network connection request to a satellite, the network connection request being used for instructing the terminal to establish a network connection with the satellite; and receiving a target response message returned to the terminal by a device on the satellite. By means of said method, an IoT terminal device can establish a network connection with a network on the basis of a satellite having on-board store-and-forward characteristics, such that full communication coverage is enhanced and the reliability of terminal communication is ensured, thereby providing a communication basis for terminals in remote areas, and better meeting the communication requirements of terminal devices.

## Description

### CROSS-REFERENCE

The present application claims a priority to Chinese Patent Disclosure No. 2024100449758 filed on 11 January, 2024, and titled "COMMUNICATION METHOD, APPARATUS, COMPUTER DEVICE AND STORAGE MEDIUM", the entire content of which is incorporated herein by reference for all purposes.

### FIELD

This disclosure relates to the technical field of communication technologies, and in particular to a communication method, a communication device, a storage medium and a computer program product.

### BACKGROUND

In areas where it is difficult to deploy such devices as a base station, a gateway station, information exchange needs to be achieved through a satellite. The cost requirements for deploying a satellite at ground are reduced by deploying a 4G/5G base station. However, due to the limited deployment of gateway stations, a satellite may not be able to connect to a gateway station in a timely manner when it is in orbit, and thus data may not be immediately transmitted back to a core network.

In practical application scenarios, due to the limited device resources on the satellite, only as few core network devices as possible can be deployed on the satellite. However, there are numerous Internet of Things (IoT) devices, and it is difficult to store subscription information for each device on the satellite. Therefore, relevant core network devices such as a home subscriber server (HSS), an authentication server function (AUSF), a unified data management (UDM) are deployed on the ground. Consequently, when the satellite is operating in an on-board store-and-forward mode, a registration request from user equipment (UE) cannot be sent to the ground in a timely manner to complete service authorization. How to achieve authentication and authorization for the UE timely is an urgent problem to be solved.

### SUMMARY

In view of this, this disclosure provides a communication method, a communication device, a computer-readable storage medium and a computer program product.

In a first aspect, the present disclosure provides a communication method, applied to a terminal, including: sending a network connection request to a satellite, in which the network connection request is used for the terminal to establish a network connection with the satellite; and receiving a target response message returned to the terminal by a device on the satellite.

In some embodiments, the network connection request includes a capability of supporting store-and-forward and a terminal identifier.

In some embodiments, receiving the target response message returned to the terminal by the device on the satellite includes: receiving a first request accept response message returned to the terminal by the device on the satellite, in which the first request accept response message carries an on-board store-and-forward data retention period and an on-board store-and-forward data storage quota, and the first request accept response message is generated by the satellite after determining that the terminal is in a network-accessible state based on the terminal identifier and the capability of supporting store-and-forward.

In some embodiments, the network connection request includes a capability of supporting store-and-forward and a terminal identifier, and receiving the target response message returned to the terminal by the device on the satellite includes: receiving a second request accept response message returned to the terminal by the device on the satellite, in which the second request accept response message carries an on-board store-and-forward data retention period and an on-board store-and-forward data storage quota, and the second request accept response message is generated by the satellite after determining that the terminal is in a limited transmission state based on a second configuration policy, the terminal identifier, and the capability of supporting store-and-forward.

In some embodiments, the network connection request includes a capability of supporting store-and-forward, and receiving the target response message returned to the terminal by the device on the satellite includes: receiving a request suspend response message returned to the terminal by the device on the satellite, in which the request suspend response message is generated by the device on the satellite based on the satellite being in a store-and-forward mode, the terminal meeting a condition of initial access to the satellite, and the terminal having the capability of supporting store-and-forward; and the request suspend response message carries a satellite identifier.

In some embodiments, the network connection request includes a capability of supporting store-and-forward, and receiving the target response message returned to the terminal by the device on the satellite includes: receiving a reject response message returned to the terminal by the device on the satellite, in which the reject response message is generated by the device on the satellite based on the satellite being in a store-and-forward mode, the terminal meeting a condition of initial access to the satellite, and the terminal having the capability of supporting store-and-forward; the reject response message carries a reject reason message and a satellite identifier.

In some embodiments, the target response message further carries a satellite identifier and a bearer identity (ID).

In some embodiments, the target response message further carries a satellite return time.

In some embodiments, before sending the network connection request to the satellite, the method further includes: receiving a satellite broadcast message.

In some embodiments, the satellite broadcast message carries a store-and-forward feature and/or a satellite identifier.

In some embodiments, the method further includes: sending to-be-transmitted data that meets the on-board store-and-forward data storage quota to the satellite.

In a second aspect, the present disclosure provides a communication method, applied to a satellite, including: receiving a network connection request sent by a terminal, in which the network connection request is used to instruct the terminal to establish a network connection with the satellite; and generating a target response message based on the network connection request, and returning the target response message to the terminal.

In some embodiments, the network connection request carries a terminal identifier and a capability of supporting store-and-forward.

In some embodiments, generating the target response message based on the network connection request, and returning the target response message to the terminal includes:
determining that the terminal is in a network accessible state based on the terminal identifier and the capability of supporting store-and-forward, determining an on-board store-and-forward data retention period based on an available time of satellite coverage, and determining an on-board store-and-forward data storage quota; and
returning a first request accept response message to the terminal, where the first request accept response message carries the on-board store-and-forward data retention period and the on-board store-and-forward data storage quota.

In some embodiments, the method further includes: forwarding to-be-transmitted data in a case where the satellite covers a gateway station and receives the to-be-transmitted data sent by the terminal that meets a data storage quota.

In some embodiments, forwarding the to-be-transmitted data in a case where the satellite covers the gateway station and receives the to-be-transmitted data sent by the terminal that meets the data storage quota includes:
performing re-authentication processing on the terminal in a case where the satellite covers the gateway station and receives the to-be-transmitted data sent by the terminal that meets the data storage quota; and
forwarding the to-be-transmitted data when it is determined that the terminal passes the re-authentication.

In some embodiments, the network connection request carries a terminal identifier and a capability of supporting store-and-forward, and generating the target response message based on the network connection request, and returning the target response message to the terminal includes:
determining, based on a second configuration policy, the terminal identifier, and the capability of supporting store-and-forward, that the terminal is in a limited transmission state, determining an on-board store-and-forward data retention period based on an available time of satellite coverage, and determining an on-board store-and-forward data storage quota; and
returning a second request accept response message to the terminal, in which the second request accept response message carries the on-board store-and-forward data retention period and the on-board store-and-forward data storage quota.

In some embodiments, the method further includes:
obtaining subscription information of the terminal in a case where the satellite covers the gateway station; and
forwarding to-be-transmitted data and updating the limited transmission state of the terminal to an unlimited transmission state when it is determined that the terminal passes authentication based on the subscription information and the to-be-transmitted data sent by the terminal that meets the on-board store-and-forward data storage quota is received.

In some embodiments, the method further includes:
sending a state update message to the terminal when it is detected that the terminal falls within a coverage of the satellite, in which the state update message is used to indicate that the limited transmission state of the terminal is updated to the unlimited transmission state.

In some embodiments, the target response message further carries a satellite identifier and a bearer identity (ID).

In some embodiments, generating the target response message based on the network connection request, and returning the target response message to the terminal includes:
generating a request suspend response message based on the satellite being in a store-and-forward mode, the terminal meeting a condition of initial access to the satellite, and the terminal having the capability of supporting store-and-forward; and
returning the request suspend response message to the terminal, in which the request suspend response message carries a satellite identifier.

In some embodiments, generating the target response message based on the network connection request, and returning the target response message to the terminal includes:
generating a reject response message based on the satellite being in a store-and-forward mode, the terminal meeting a condition of initial access to the satellite, and the terminal having the capability of supporting store-and-forward; and
returning the reject response message to the terminal, in which the reject response message carries a reject reason message and a satellite identifier.

In some embodiments, the method further includes:
sending a broadcast message, in which the broadcast message is used to instruct to the terminal to connect to the satellite.

In some embodiments, the broadcast message comprises a store-and-forward feature and/or a satellite identifier.

In some embodiments, the target response message further carries a satellite return time.

In a third aspect, this disclosure provides a communication device, applied to a terminal, including:
a first sending unit, configured to send a network connection request to a satellite, in which the network connection request is used to instruct the terminal to establish a network connection with the satellite; and
a first receiving unit, configured to receive a target response message returned to the terminal by a device on the satellite.

In a fourth aspect, this disclosure provides a communication device, applied to a satellite, including:
a second receiving unit, configured to receive a network connection request sent by a terminal, in which the network connection request is used to instruct the terminal to establish a network connection with the satellite; and
a second sending unit, configured to generate a target response message based on the network connection request, and return the target response message to the terminal.

In a fifth aspect, this disclosure provides a communication device, including a memory, a transceiver, and a processor. The memory is configured to store a computer program, the transceiver is configured to transmit and receive data under control of the processor, and the processor is configured to read the computer program in the memory and perform the steps of the communication method provided in the above embodiments when executing the computer program.

In a sixth aspect, this disclosure provides a computer-readable storage medium. The computer-readable storage medium stores a computer program, and the computer program is used to cause a processor to perform the steps of the communication method provided in the above embodiments.

In a seventh aspect, this disclosure further provides a computer program product, including a computer program, which, when executed by a processor, causes the processor to implement the steps of the communication method provided in the above embodiments.

In the communication method, the communication device and the computer-readable storage medium, the terminal may send the network connection request to the satellite, and the network connection request is used to instruct the terminal to establish the network connection with the satellite. The terminal may receive the target response message returned to the terminal by the device on the satellite. With this method, an IoT terminal device can establish a network connection with the network based on the satellite with an on-board store-and forward feature, an overall communication coverage is increased and the reliability of terminal communication is ensured, thereby providing a communication basis for terminals in remote areas, and better satisfying the communication demands of terminal devices.

The above description is only an overview of the technical solutions of this disclosure. In order to more clearly understand the technical means of this disclosure, and to implement them in accordance with the contents of the specification, and to make the above and other objects, features, and advantages of this disclosure more apparent and understandable, the specific embodiments of this disclosure are listed below.

### BRIEF DESCRIPTION OF THE DRAWINGS

Through the detailed description mentioned hereinafter, the advantages and benefits will be apparent to a person skilled in the art. The following drawings are for illustrative purposes only, but shall not be construed as limiting this disclosure. In the drawings, a same reference number represents a same member. In these drawings,
FIG. 1 is schematic diagram showing an application environment of a communication method according to embodiments of this disclosure;
FIG. 2 is a flowchart of a communication method according to embodiments of this disclosure;
FIG. 3 is a flowchart of a communication method according to embodiments of this disclosure;
FIG. 4 is a flowchart of a communication method according to embodiments of this disclosure;
FIG. 5 is a flowchart of a communication method according to embodiments of this disclosure;
FIG. 6 is a flowchart of a communication method according to embodiments of this disclosure;
FIG. 7 is a signaling diagram of a communication method according to embodiments of this disclosure;
FIG. 8 is a signaling diagram of a communication method according to embodiments of this disclosure;
FIG. 9 is a signaling diagram of a communication method according to embodiments of this disclosure;
FIG. 10 is a structural block diagram of a communication device according to embodiments of this disclosure;
FIG. 11 is another structural block diagram of a communication device according to embodiments of this disclosure; and
FIG. 12 is schematic diagram showing an internal structure of a communication device according to embodiments of this disclosure.

### DETAILED DESCRIPTION

The following embodiments of the technical solutions of this disclosure are described in detail with reference to the accompanying drawings. The following embodiments are only used to more clearly illustrate the technical solutions of this disclosure, and are therefore only used as examples, but shall not be construed as limiting the scope of this disclosure.

Unless otherwise defined, all technical and scientific terms used herein have the same meaning as commonly understood by a person skilled in the art. Terms used herein are merely for the purpose of describing specific embodiments, but shall not be construed as limiting the scope of this disclosure. Terms "including" and "having" and any variations thereof in the specification, claims and the brief description of the drawings in this disclosure are intended to encompass non-exclusive inclusions.

In the descriptions of the embodiments of this disclosure, the technical terms such as "first" and "second" are merely used to distinguish different objects, and cannot be understood as indicating or implying relative order or importance or implicitly indicating the number of indicated technical features. In the descriptions of the embodiments of this disclosure, the term of "multiple" means two or more than two, unless otherwise specifically defined.

The expression "embodiment" mentioned throughout the specification means that specific features, structures, or characteristics related to the embodiment are included in at least one embodiment of this disclosure. Therefore, this expression appearing throughout the entire specification may not necessarily refer to the same embodiment, nor is it an independent or alternative embodiment that is mutually exclusive with other embodiments. As can be explicitly and implicitly appreciated by a person skilled in the art, the embodiment described herein may be combined with other embodiments.

The term "and/or" in the embodiments of this disclosure merely describes an association relationship of associated objects, which indicates that there may be three types of relationships. For example, A and/or B may represent three situations: only A being included, both A and B being included, only B being included. The character "/" generally indicates that there is an "or" relationship between associated objects in front of it and behind it.

The term "multiple" in the embodiments of this disclosure refers to two or more than two. Similarly, "multiple groups" refers to more than two or more groups, and "multiple pieces" refers to two or more pieces.

In the embodiments of this disclosure, such technical terms as "center", "longitudinal", "lateral", "length", "width", "thickness", "on/above", "under/below", "front", "back", "left", "right", "vertical", "horizontal", "top", "bottom", "inside", "outside", "clockwise", "counterclockwise", "axial", "radial", and "circumferential" may be used to indicate directions or positions as viewed in the drawings, and they are merely used to facilitate the description in this disclosure, rather than to indicate or imply that a device or member must be arranged or operated at a specific position, and therefore should not be understood as a limitation on the embodiments of this disclosure.

In the embodiments of this disclosure, unless explicitly specified or defined otherwise, terms such as "install", "connect", "connection", and "fix" should be construed in a broad sense. For example, it may be a fixed connection, or a detachable connection, or an integral structure; it may be a mechanic connection, an electrical connection or a communication connection; it may be a direct connection, or an indirect connection via an intermediate medium, or an interior connection of two elements or an interaction relationship between two elements. A person skilled in the art may derive the specific meaning of the term in the embodiments of this disclosure according to the specific situation.

Embodiments of the present disclosure provide a communication method, and a communication device, to realize communication between a terminal and a satellite, and between a satellite and a ground network based on an on-board store-and-forward mode. The method and the device are based on the same concept. Since the principles of solving problems in the method and the device are similar, reference may be made to each other for implementations of the device and the method, and thus the description thereof is omitted herein.

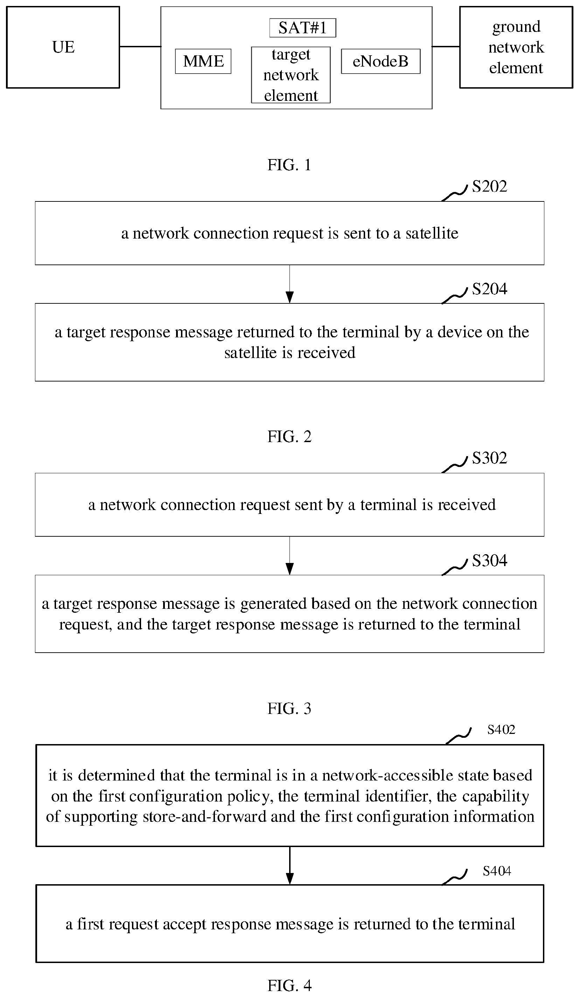

FIG. 1 shows a schematic diagram of a communication system architecture according to the embodiments of this disclosure. As shown in FIG. 1, the communication system architecture may include the following logical network elements: a user equipment (UE), a satellite (SAT) and a ground network element, in which the satellite may include an evolved Node B (eNodeB), a mobile management entity (MME), a store and forward control function (SFCF) and a target network element. The target network element may be a service capability exposure network element (SCEF), or a service gateway (S-GW). The ground network element may include a store-and-forward management function (SFMF), a server network element, or, the server network element may be a home subscriber server (HSS), or a switch (P-SW), or a store and forward server (SandF server). Optionally, 5GC and base stations may be deployed on the SAT, the 5GC includes an access and mobility management function (AMF), a session management function (SMF), a user plane function (UPF), and an authentication server function (AUSF). There may be multiple ways to deploy the functions of all network elements on the satellite, which may be new network elements or enhancements to existing network elements.

AMF: a core network unit, mainly responsible for registration management, connection management, access management, mobility management, as well as security and access management and authorization-related functions.

SMF: a core network unit, mainly responsible for generating, updating and deleting a protocol data unit (PDU) session.

UPF: a core network unit, mainly responsible for user plane network traffic transmission.

For IoT devices, lightweight EPC (including MME, S-GW, P-GW) or 5GC (AMF+SMF+UPF+AUSF) and base stations are deployed on the same satellite, and other cellular internet of things (CIoT) devices are on the ground (it is also possible that all CIoT devices are on the ground (or on the satellite). The functions of the above devices may be implemented as separate network elements or as a single device. Home subscriber server (HSS)/UDM and other devices are on the ground. That is, functions of on-board devices include a function of processing NAS information, which only requires an authentication function of comparing the subscription information of the UE and the network. Optionally, the functions of on-board devices may include the function of allocating IP addresses to terminals and user-plane network elements. It may be an independent module or a new integrated network element.

Optionally, in the requirement study of 3GPP SA1 R19, scenarios that require on-board store-and-forward of data may include, for example, research institutions needing to study animal living habits, movement trajectories, etc.; government departments needing to mitigate or avoid disasters and issue warnings timely, such as detection of submarine cables. These IoT devices deployed on animals or devices are located in special or remote areas where there are no communication base stations, and therefore data transmission needs to be carried out via satellite communication. In cases where the terminal device has low requirements on latency, the terminal may first upload data to the satellite, store the data on the satellite (which may have a base station or a core network element), and then forward the data when the satellite can access a gateway station.

As can be appreciated, the communication system architecture in FIG. 1 is merely illustrative of a possible application environment of the solutions of this disclosure. As can be appreciated by a person skilled in the art, the embodiments of this disclosure can be applied to the communication system architecture of FIG. 1 or similar communication system architectures. Communication architectures obtained by appropriate modifications and variations based on the communication system architecture of FIG. 1 are still applicable to the solutions of the embodiments of this disclosure.

The technical solutions in the embodiments of this disclosure may be applied to various systems. For example, the applicable systems may include a long term evolution (LTE) system, a LTE frequency division duplex (FDD) system, a LTE time division duplex (TDD) system, an advanced long term evolution (LTE-A) system, a universal mobile telecommunication system (UMTS), a worldwide interoperability for microwave access (WiMAX) system, a 5G new radio (NR) system and its evolved communication system, etc. These various systems may include a terminal device and a network device. These systems may further include a core network, such as an evolved packet system (EPS), a 5G system (5GS), etc.

The terminal device involved in the embodiments of this disclosure may be an Internet of Things (IoT) terminal device or a Cellular Internet of Things (CIoT) device; it may be also a device that provides voice and/or data connectivity to a user, a handheld device with a wireless connection function, or any other processing device connected to a wireless modem. In different systems, a name of the terminal device may vary. For example, in a 5G system, the terminal device may be called a user equipment (UE). A wireless terminal device may be a USB storage device, any other personal computer memory device, or a dongle. It may also communicate with one or more core networks (CN) via a radio access network (RAN). The wireless terminal device may be a mobile terminal device, such as a mobile phone (or "cellular" phone) and a computer with a mobile terminal device. For example, it may be a portable, pocket-sized, handheld, computer-built-in, or vehicle-mounted mobile device that exchanges voice and/or data with the radio access network. For example, it may be a personal communication service (PCS) phone, a cordless phone, a session initiated protocol (SIP) phone, a wireless local loop (WLL) station, a personal digital assistant (PDA), a personal computer, a tablet computer, a machine-type communication (MTC) terminal device, etc. The wireless terminal device may also be called a system, a subscriber unit, a subscriber station, a mobile station, a mobile, a remote station, an access point, a remote terminal, an access terminal, a user terminal, a user agent, a user device, as well as a wireless access point and router/modem that meet the definitional limitations set forth herein, and the embodiments of this disclosure are not limited thereto.

The network device in the embodiments of this disclosure may be a base station, which may include multiple cells providing services to terminals. Depending on specific application scenarios, the base station may also be referred to as an access point, or a device in the access network that communicates with wireless terminal devices over one or more sectors via an air interface, or any other name. The network device may be used to convert received over-the-air frames into Internet Protocol (IP) packets and vice versa, serving as a router between the wireless terminal device and the rest of the access network, the rest of the access network may include an IP communication network. The network device may also coordinate the management of attributes of the air interface. For example, the network device involved in the embodiments of this disclosure may be an evolved Node B (eNB or e-NodeB) in a Long Term Evolution (LTE) system, a 5G base station (gNB) in a 5G network architecture (next generation system), or a home evolved Node B (HeNB), a relay node, a femto, a pico, a network testing device, etc., and the embodiments of the present disclosure are not limited thereto. In some network structures, the network device may include a centralized unit (CU) node and a distributed unit (DU) node, and the centralized unit and the distributed unit may be geographically separated.

The terminal device in the embodiments of this disclosure sends relevant information or similar descriptions to the network side device, which merely indicates that the terminal device sends the relevant information by means of a wireless signal, and its intended recipient is the network device. The network device can obtain the relevant information by receiving the wireless signal.

In an embodiment, as shown in FIG. 2, a communication method is provided, and the method is described by way of an example applied to the terminal shown in FIG. 1. The communication method may include the following steps.

In Step 202, a network connection request is sent to a satellite.

The network connection request is used for the terminal to establish a network connection with the satellite.

Optionally, the terminal sends the network connection request to an MME in the satellite, the network connection request may carry corresponding data information based on a practical application scenario, and requests to establish a network connection with the satellite.

In Step 204, a target response message returned to the terminal by a device on the satellite is received.

Optionally, after receiving the network connection request, the satellite may generate the target response message based on a current communication mode of the satellite, and return the target response message to the terminal. The device on the satellite may be the MME.

In an example, the terminal may generate a network connection request based on a capability of supporting store-and-forward, and send the network connection request to the satellite, the network connection request carries an indication of supporting a store-and-forward feature. In one example, the terminal may send the network connection request to the MME in the satellite, the network connection request carries an indication of supporting the store-and-forward feature. After the satellite receives the network connection request, the MME on the satellite may generate a target response message based on a current communication mode of the satellite, and return the target response message to the terminal.

In the above communication method, the terminal may send the network connection request to the satellite, and the network connection request is used to indicate that the terminal requests to establish the network connection with the satellite. The terminal may receive the target response message, and the target response message is returned to the terminal by the device on the satellite. With this method, an IoT terminal device can establish a network connection with the network based on the satellite with an on-board store-and-forward feature, an overall communication coverage is increased and the reliability of terminal communication is ensured, thereby providing a communication basis for terminals in remote areas, and better satisfying the communication demands of terminal devices.

In an embodiment, the network connection request includes a capability of supporting store-and-forward and a terminal identifier. Optionally, the capability of supporting store-and-forward may include identification information indicating "supporting a store-and-forward feature", which means that the terminal supports the store-and-forward feature, for example, the terminal may be such an IoT device that is not sensitive to latency and has low requirements on latency. The terminal identifier may be device identifier information of the terminal, for example, it may be an international mobile subscriber identity (IMSI).

In an embodiment, receiving the target response message returned to the terminal by the device on the satellite may include: receiving a first request accept response message returned to the terminal by the device on the satellite.

The first request accept response message carries an on-board store-and-forward data retention period and an on-board store-and-forward data storage quota, and the first request accept response message is generated by the satellite after determining that the terminal is in a network-accessible state based on the terminal identifier and the capability of supporting store-and-forward. The data retention period (SandF data retention period) may be a data retention period determined based on an available time of satellite coverage, or it may also be duration of an unavailability period (Unavailability Period Duration). The data storage quota (SandF data storage quota) may be a data capacity that the satellite allows the terminal to transmit, for example, it may include a quantity of data transmissions and a size of each transmission.

Optionally, when the terminal wants to transmit information through the network, it may send a network connection request to the MME on the satellite. The terminal may generate the network connection request, which carries the capability of supporting store-and-forward and the terminal identifier, and send the network connection request to the MME on the satellite. After receiving the network connection request, when the MME on the satellite determines that the terminal is in an accessible state, the MME on the satellite may determine an on-board store-and-forward data retention period based on an available time of satellite coverage, determine an on-board store-and-forward data storage quota, and generate a first request accept response message based on the on-board store-and-forward data retention period and the on-board store-and-forward data storage quota. In this way, the MME on the satellite may return the first request accept response message to the terminal. After receiving the first request accept response message, the terminal may determine that it can transmit data to the satellite.

In this embodiment, the data forwarding process may be simplified, and the user experience and the network registration efficiency of the terminal may be improved.

In an embodiment, the network connection request includes a capability of supporting store-and-forward, a terminal identifier and first configuration information. Optionally, the capability of supporting store-and-forward may be identification information indicating "supporting a store-and-forward feature", which means that the terminal supports the store-and-forward feature, for example, the terminal may be an IoT device that is not sensitive to latency and has low requirements on latency. The terminal identifier may be device identifier information of the terminal, for example, it may be an international mobile subscriber identity (IMSI). The first configuration information may be pre-configured information, for example, it may be information of the terminal, specifically, it may be security information of the terminal, or it may be subscription information of the terminal, or, it may be user plane information of the terminal. The satellite may perform security authentication or authorization on the terminal based on the information of the terminal. For example, the satellite may determine that the terminal is allowed to access the network based on the information of the terminal.

Accordingly, receiving the target response message returned to the terminal by the device on the satellite may include: receiving a first request accept response message returned to the terminal by the device on the satellite.

The first request accept response message carries an on-board store-and-forward data retention period and an on-board store-and-forward data storage quota, the first configuration information is used to enable the satellite to perform authorization on the terminal, and the first request accept response message is generated by the satellite after determining that the terminal is in a network-accessible state based on a first configuration policy, the terminal identifier, the capability of supporting store-and-forward, and the first configuration information. The data retention period (SandF data retention period) may be a data retention period determined based on an available time of satellite coverage, or it may also be duration of an unavailability period (Unavailability Period Duration). The data storage quota (SandF data storage quota) may be a data capacity that the satellite allows the terminal to transmit, for example, it may include a quantity of data transmissions and a size of each transmission.

Optionally, when the terminal wants to transmit information through the network, it may send a network connection request to the MME on the satellite. The terminal may generate the network connection request, which carries the capability of supporting store-and-forward, the terminal identifier, and the first configuration information, and send the network connection request to the MME on the satellite. After receiving the network connection request, the MME on the satellite may perform authorization on the terminal based on the first configuration policy. When the MME on the satellite determines that the terminal is in an accessible state, the MME on the satellite may determine an on-board store-and-forward data retention period based on an available time of satellite coverage, determine an on-board store-and-forward data storage quota, and generate a first request accept response message based on the on-board store-and-forward data retention period and the on-board store-and-forward data storage quota. In this way, the MME on the satellite may return the first request accept response message to the terminal. After receiving the first request accept response message, the terminal may determine that it can transmit data to the satellite.

In this embodiment, the first configuration information of the terminal is sent to the satellite during a registration process, a secondary data interaction between the terminal and the satellite is avoided, a data forwarding process is simplified, and the user experience and the network registration efficiency of the terminal is improved.

In an embodiment, the network connection request includes a capability of supporting store-and-forward and a terminal identifier. Optionally, the capability of supporting store-and-forward may be identification information indicating "supporting a store-and-forward feature", which means that the terminal supports the store-and-forward feature, for example, the terminal may be an IoT device that is not sensitive to latency and has low requirements on latency. The terminal identifier may be device identifier information of the terminal, for example, it may be an international mobile subscriber identity (IMSI).

Accordingly, receiving the target response message returned to the terminal by the device on the satellite may include: receiving a second request accept response message returned to the terminal by the device on the satellite.

The second request accept response message carries an on-board store-and-forward data retention period and an on-board store-and-forward data storage quota. After the satellite determines that the terminal is in a limited transmission state based on a second configuration policy, the terminal identifier, and the capability of supporting store-and-forward, the satellite generates the second request accept response message. The second configuration policy may be a pre-configured operator configuration policy, and a specific content of the second configuration policy may be that when the terminal supports the store-and-forward feature, it is determined that the terminal is in a limited transmission state (limited state), and the terminal is allowed to send limited data to the satellite.

Optionally, when the terminal wants to transmit information through the network, it may send a network connection request to the MME on the satellite. The terminal may generate the network connection request based on the terminal identifier and the capability of supporting store-and-forward, and send the network connection request to the satellite. After receiving the network connection request sent by the terminal, the MME on the satellite may determine that the terminal is in a limited transmission state based on the terminal identifier and the capability of supporting store-and-forward reported by the terminal, as well as the pre-configured second configuration policy, and the MME on the satellite may determine an on-board store-and-forward data retention period based on an available time of satellite coverage, determine an on-board store-and-forward data storage quota, and generate a second request acceptance response message. In this way, the MME on the satellite may return the second request accept response message to the terminal. After receiving the second request accept response message, the terminal may determine that it can currently transmit a limited data to the satellite.

In an embodiment, the second request accept response message may include a satellite identifier, a bearer identity (ID) and the like. The satellite may return the second request accept response message to the terminal.

In this embodiment, the network connection request carrying the capability of supporting store-and-forward may be sent to the satellite, so that the satellite returns the second request accept response message to the terminal, thereby quickly establishing communication between the terminal and the satellite.

In an embodiment, the network connection request includes a capability of supporting store-and-forward. The capability of supporting store-and-forward may be identification information indicating "supporting a store-and-forward feature" , which means that the terminal supports the store-and-forward feature, for example, the terminal may be an IoT device that is not sensitive to latency and has low requirements on latency.

Accordingly, receiving the target response message returned to the terminal by the device on the satellite may include: receiving a request suspend response message returned to the terminal by the device on the satellite.

The request suspend response message is generated by the device on the satellite based on the satellite being in a store-and-forward mode, the terminal meeting a condition of initial access to the satellite, and the terminal having the capability of supporting store-and-forward. The request suspend response message carries a satellite identifier.

Optionally, when the terminal needs to establish a network connection with the satellite, the terminal generates a network connection request carrying a capability of supporting store-and-forward, and sends the network connection request to the satellite. After receiving the network connection request carrying the capability of supporting store-and-forward, the satellite may determine that the terminal sending the network connection request supports the store-and-forward feature based on the capability of supporting store-and-forward carried in the network connection request. In a case where the satellite is currently in a store-and-forward mode, and the terminal sending the network connection request is a terminal that accesses the satellite for the first time, the satellite may store a terminal identifier and the capability of the terminal, and generate a request suspend response message, and return the request suspend response message to the terminal, indicating that the satellite has suspended the network connection request sent by the terminal.

Optionally, after receiving the request suspend response message sent by the satellite, the terminal may switch to a low power consumption mode, for example, to a power saving mode. In an example, before switching to the power saving mode, the terminal may determine a next wake-up time based on ephemeris information, and after determining the next wake-up time, switch to the power saving mode. When a current time reaches the next wake-up time, the terminal may exit the power saving mode and switch to a regular operating state. The ephemeris information may be a precise position or trajectory table of a celestial body that changes over time, which is a function of time.

Optionally, after the terminal is within the coverage of the satellite, it may initiate an attach request again, that is, send the network connection request to the satellite, and the network connection request carries the capability of supporting store-and-forward. In a case where the MME on the satellite determines that it is a terminal that is not accessing the satellite for the first time based on the terminal identifier of the terminal, the satellite may authenticate the terminal based on locally stored authentication information, and send a message to the terminal, the message carries information required for the terminal to authenticate the network, and completes a two-way authentication. Another possible implementation may be that after the terminal is within the coverage of the satellite, it may establish, based on a satellite identifier carried in a reject response message, an RRC connection with a satellite that matches the satellite identifier, and the terminal may initiate an attach request again based on the RRC connection, that is, send the network connection request to the satellite through the RRC connection, and the network connection request carries the capability of supporting store-and-forward. After receiving the network connection request, the satellite may perform two-way authentication based on the terminal identifier carried in the network connection request and the authentication information of the terminal stored locally in the satellite.

In this way, after determining that the terminal has passed the authentication, the satellite may accept the network connection request sent by the terminal, determine the data retention period based on the available time of satellite coverage, and determine the data storage quota corresponding to the terminal. The satellite may generate a request accept response message based on the data retention period and the data storage quota, and return the request accept response message to the terminal.

In this embodiment, when the terminal sends the network connection request that carries the capability of supporting store-and-forward to the satellite, reliable communication between the terminal device and the satellite may be achieved. By using the request suspend response message to notify the terminal that the network request has been suspended by the satellite, the terminal may, when it subsequently falls within the coverage of the satellite, initiate a request to re-access the network in a timely manner, thereby improving the flexibility of network access of the terminal.

In an embodiment, the network connection request includes a capability of supporting store-and-forward. The capability of supporting store-and-forward carried by the terminal may be identification information indicating "supporting a store-and-forward feature" carried by the terminal, which means that the terminal supports the store-and-forward feature, for example, the terminal may be an IoT device that is not sensitive to latency and has low requirements on latency.

Accordingly, receiving the target response message returned to the terminal by the device on the satellite may include: receiving a reject response message returned to the terminal by the device on the satellite.

The device on the satellite generates the reject response message based on the satellite being in a store-and-forward mode, the terminal meeting a condition of initial access to the satellite, and the terminal having the capability of supporting store-and-forward. The reject response message carries a reject reason message and a satellite identifier.

Optionally, when the terminal needs to establish a network connection with the satellite, the terminal generates a network connection request carrying a capability of supporting store-and-forward, and sends the network connection request to the satellite. The satellite may determine that the terminal sending the network connection request supports the store-and-forward feature based on the capability of supporting store-and-forward carried in the network connection request. In a case where the satellite is currently in a store-and-forward mode, and the terminal sending the network connection request is a terminal that accesses the satellite for the first time, the satellite may suspend the network connection request corresponding to the terminal, store a terminal identifier and the capability of the terminal, and generate a reject response message carrying a reject reason message and a satellite identifier, and return the reject response message to the terminal. The reject reason message may be a request suspend message, that is, the satellite is in the on-board store-and-forward mode, and the terminal supports the on-board store-and-forward mode, indicating that the satellite has suspended the network connection request sent by the terminal.

In an example, in a case where the satellite covers the gateway station, that is, when a feeder link between the satellite and the ground is available (feeder link is available), the MME on the satellite may send a network connection request to a ground network element through a C-SCN-Ground (core network - space core network ground), obtain the subscription information (authentication information) of the terminal through the ground network element, and store the authentication information of the terminal in the satellite.

Optionally, after the terminal is within the coverage of the satellite, it may initiate an attach request again, that is, send the network connection request to the satellite, and the network connection request carries the capability of supporting store-and-forward. In a case where the MME on the satellite determines that it is a terminal that is not accessing the satellite for the first time based on the terminal identifier of the terminal, the satellite may authenticate the terminal based on locally stored authentication information, and send a message to the terminal, the message carries information required for the terminal to authenticate the network, and completes a two-way authentication. Another possible implementation may be that after the terminal is within the coverage of the satellite, it may establish, based on a satellite identifier carried in a reject response message, an RRC connection with a satellite that matches the satellite identifier, and the terminal may initiate an attach request again based on the RRC connection, that is, send the network connection request carrying the capability of supporting store-and-forward to the satellite through the RRC connection. After receiving the network connection request, the satellite may perform two-way authentication based on the terminal identifier carried in the network connection request and the authentication information of the terminal stored locally in the satellite.

In this way, after determining that the terminal has passed the authentication, the satellite may accept the network connection request sent by the terminal, determine the data retention period based on the available time of satellite coverage, and determine the data storage quota corresponding to the terminal. The satellite may generate a request accept response message based on the data retention period and the data storage quota, and return the request accept response message to the terminal.

In this embodiment, through multiple requests between the terminal and the satellite, the IoT terminal device may register with the network through the satellite with the on-board store-and forward feature, thereby realizing communication between the terminal device and the ground through the satellite and improving communication reliability.

In an embodiment, receiving the target response message returned to the terminal by the device on the satellite may include: receiving a connection response message returned to the terminal by the device on the satellite.

The connection response message is a response message to the network connection request, and the network connection request carries the terminal identifier and the capability of supporting store-and-forward, the connection response message carries the data retention period and the data storage quota. The terminal identifier may be device identifier information of the terminal, for example, it may be an international mobile subscriber identity (IMSI). The target response message may be a connection response message.

Optionally, the terminal may generate a network connection request based on the terminal identifier and the capability of supporting store-and-forward, and send the network connection request to the satellite. After receiving the network connection request, the satellite may parse the network connection request, obtain the terminal identifier and the capability of supporting store-and-forward carried by the network connection request, and determine the data retention period based on the available time of satellite coverage, and determine the data storage quota corresponding to the terminal. The satellite may generate a connection response message based on the data retention period and the data storage quota, and return the connection response message to the terminal.

In this embodiment, communication between the terminal and the satellite can be achieved, and a connection between the terminal and the satellite can be established, providing a communication basis for subsequent data forwarding.

In an embodiment, the target response message further carries a satellite identifier and a bearer identity (ID).

Optionally, when generating the target response message, the satellite may generate the target response message that further carries a satellite identifier and a bearer ID. For example, it may generate the first request accept response message that carries the satellite identifier and the bearer ID, or may also generate the second request accept response message that carries the satellite identifier and the bearer ID. The terminal may, based on the satellite identifier carried in the target response message, send to-be-transmitted data to a satellite whose identification information matches the satellite identifier.

In an embodiment, the target response message further carries a satellite return time.

Optionally, the satellite return time may be a time when the satellite flies back next time. The terminal may re-initiate a network connection request to the satellite based on the satellite return time carried in the target response message when the satellite return time is reached or after an interval of the satellite return time.

In this embodiment, it allows the terminal to initiate the network connection request to the satellite accurately and in a timely manner after the satellite return time is reached.

In an embodiment, before sending the network connection request to the satellite, the method further includes: receiving a satellite broadcast message.

Optionally, the satellite may send the broadcast message within the communication coverage of the satellite. After being powered on, the terminal may search for the network and camp on it. After receiving the broadcast message sent by the satellite, the terminal may, based on the broadcast message, send the network connection request to the satellite that sent the broadcast message.

In this embodiment, the terminal may, based on the received broadcast message, initiate a registration request to a satellite with which communication is possible.

In an example, the satellite broadcast message carries a store-and-forward feature and/or a satellite identifier (ID).

The broadcast message includes the store-and-forward feature and/or the satellite ID. The store-and-forward feature indicates that the satellite is in an onboard store-and-forward mode, that is, a satellite that may perform a store-and-forward satellite operation (SandF Satellite Operation). For example, a base station or part of core network elements may be deployed on the satellite, and the terminal establishes a service link with the satellite to transmit signaling or data. When the satellite moves to establish the feeder link with the ground, the signaling or data may be exchanged with a ground core network through a gateway station. The satellite ID represents an identifier of the satellite, such as a satellite serial number.

Optionally, the terminal may parse the broadcast message to obtain the store-and-forward feature and/or satellite ID carried in the broadcast message. In an example, the terminal may obtain the store-and-forward feature and satellite ID carried in the broadcast message, or, the terminal may obtain the store-and-forward feature carried in the broadcast message, or, the terminal may obtain the satellite ID carried in the broadcast message.

In an embodiment, the communication method further includes: sending to-be-transmitted data that meets the data storage quota to the satellite.

Optionally, when there is data meeting an emergency transmission condition, the terminal may, based on the data storage quota, extract to-be-transmitted data from the data that meets the emergency transmission condition, and send the to-be-transmitted data to the satellite.

In an example, the terminal may send the to-be-transmitted data to a target network element in the satellite. After receiving the to-be-transmitted data, the target network element may associate the to-be-transmitted data with the terminal identifier of the terminal, which is the terminal that sends the to-be-transmitted data, and forward the to-be-transmitted data to the ground network element. Optionally, the target network element may be the MME in the satellite, or a store-and-forward network element in the satellite. When a session is established, the target network element may also be a P-GW.

In this embodiment, data transmission between the terminal and the ground network element may be achieved through the satellite, the overall communication coverage is increased and the reliability of terminal communication is ensured, thereby providing communication possibilities for terminals in remote areas.

In an embodiment, as shown in FIG. 3, a communication method is provided, which is applied to a satellite. The communication method includes the following steps.

In step 302, a network connection request sent by a terminal is received.

The network connection request is used to indicate that the terminal requests to establish a network connection with the satellite.

Optionally, the satellite may receive the network connection request sent by the terminal, and parse the network connection request.

In step 304, a target response message is generated based on the network connection request, and the target response message is returned to the terminal.

Optionally, an MME on the satellite may receive the network connection request sent by the terminal, and may generate the target response message based on a current communication mode of the satellite, and return the target response message to the terminal.

In this embodiment, an IoT terminal device may establish a network connection with a satellite that is in an on-board store-and-forward mode, an overall communication coverage may be increased and the reliability of terminal communication may be ensured, thereby providing a communication basis for terminals in remote areas, and better satisfying the communication demands of terminal devices.

In an embodiment, the network connection request carries a terminal identifier and a capability of supporting store-and-forward. The capability of supporting store-and-forward may include identification information indicating "supporting a store-and-forward feature", which means that the terminal supports the store-and-forward feature, for example, the terminal may be such an IoT device that is not sensitive to latency and has low requirements on latency.

In an embodiment, generating the target response message based on the network connection request, and returning the target response message to the terminal includes: determining that the terminal is in a network accessible state based on the terminal identifier and the capability of supporting store-and-forward, determining an on-board store-and-forward data retention period based on an available time of satellite coverage, and determining an on-board store-and-forward data storage quota; and returning a first request accept response message to the terminal.

The first request accept response message carries the on-board store-and-forward data retention period and the on-board store-and-forward data storage quota, and the target response message may be the first request accept response message.

Optionally, after receiving the network connection request sent by the terminal, the satellite may determine that the terminal is in the network accessible state based on the terminal identifier and the capability of supporting store-and-forward reported by the terminal. The MME on the satellite may determine the on-board store-and-forward data retention period based on the available time of satellite coverage, and the MME on the satellite may determine the on-board store-and-forward data storage quota.

Optionally, the satellite may generate the first request accept response message based on the determined on-board store-and-forward data retention period and the on-board store-and-forward data storage quota.

In an example, the first request accept response message may include a satellite identifier, a bearer identity (ID) and the like. The satellite may return the first request accept response message to the terminal.

In an example, in a case that the satellite establishes a session based on the information reported by the terminal, the satellite may encapsulate the on-board store-and-forward data storage quota into NAS information and return the NAS information to the terminal.

In this embodiment, the satellite may determine that the terminal is in the network-accessible state and return the first request accept response message to the terminal, thereby quickly establishing communication between the terminal and the satellite.

In an embodiment, the network connection request carries a terminal identifier, a capability of supporting store-and-forward and first configuration information. Optionally, the first configuration information may be security information of the terminal, or subscription information of the terminal, or, user plane information of the terminal. The satellite may perform security authentication or authorization on the terminal based on the information of the terminal. For example, the satellite may determine that the terminal is allowed to access the network based on the first configuration information. The capability of supporting store-and-forward may be identification information indicating "supporting a store-and-forward feature", which means that the terminal supports the store-and-forward feature, for example, the terminal may be an IoT device that is not sensitive to latency and has low requirements on latency.

Accordingly, as shown in FIG. 4, generating the target response message based on the network connection request, and returning the target response message to the terminal may include following step 402 and step 404.

Step 402, it is determined that the terminal is in a network-accessible state based on the first configuration policy, the terminal identifier, the capability of supporting store-and-forward and the first configuration information, the on-board store-and-forward data retention period is determined based on the available time of satellite coverage, and the on-board store-and-forward data storage quota is determined.

The first configuration policy may be a pre-configured operator configuration policy, and a specific content of the first configuration policy may be that when the terminal supports the store-and-forward feature and the terminal reports the first configuration information, the terminal is supported to send data to the satellite, and the satellite is supported to forward data for the terminal.

Optionally, after receiving the network connection request sent by the terminal, the satellite may determine that the terminal is in the network-accessible state based on the first configuration information, the terminal identifier and the capability of supporting store-and-forward reported by the terminal, as well as the pre-configured first configuration policy, and the MME on the satellite may determine the on-board store-and-forward data retention period based on the available time of satellite coverage, determine the on-board store-and-forward data storage quota.

Step 404, a first request accept response message is returned to the terminal.

The first request accept response message carries the on-board store-and-forward data retention period and the on-board store-and-forward data storage quota, and the target response message may be the first request accept response message.

Optionally, the satellite may generate the first request accept response message based on the determined on-board store-and-forward data retention period and on-board store-and-forward data storage quota.

In an example, the first request accept response message may include a satellite identifier, a bearer identity (ID) and the like. The satellite may return the first request accept response message to the terminal.

In an example, in a case that the satellite establishes a session based on the information reported by the terminal, the satellite may encapsulate the on-board store-and-forward data storage quota into NAS information and return the NAS information to the terminal.

In this embodiment, when the terminal supports store-and-forward and reports the first configuration information, the satellite may determine that the terminal is in the network-accessible state and return the first request accept response message to the terminal, thereby quickly establishing communication between the terminal and the satellite.

In an embodiment, the communication method further includes: forwarding to-be-transmitted data in a case where the satellite covers a gateway station and receives the to-be-transmitted data sent by the terminal that meets a data storage quota.

Optionally, in a case where the satellite covers the gateway station, that is, when the satellite moves into a communication coverage of the gateway station, and the satellite receives the to-be-transmitted data sent by the terminal that meets the data storage quota, the satellite may forward the received to-be-transmitted data sent by the terminal to a ground network element.

In this embodiment, when the terminal supports store-and-forward, the first request accept response message may be returned to the terminal, communication between the terminal and the satellite is quickly established, and when there is to-be-forwarded data corresponding to the terminal, the to-be-forwarded data is forwarded directly to the ground network element to ensure timely data forwarding.

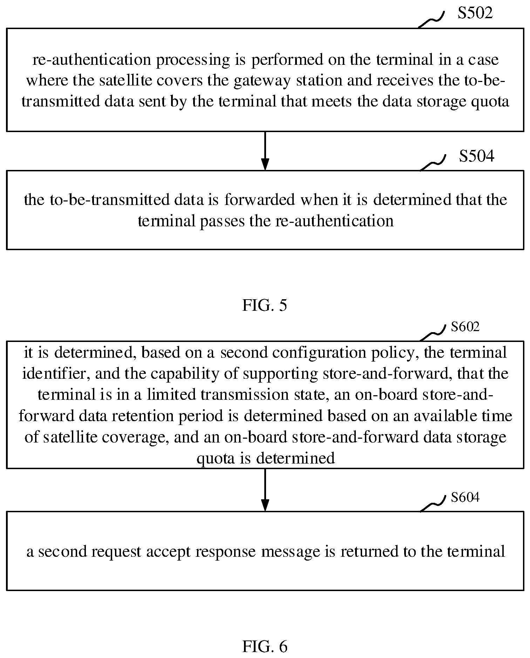

In an embodiment, as shown in FIG. 5, forwarding the to-be-transmitted data in a case where the satellite covers the gateway station and receives the to-be-transmitted data sent by the terminal that meets the data storage quota may include following step 502 and step 504.

Step 502, re-authentication processing is performed on the terminal in a case where the satellite covers the gateway station and receives the to-be-transmitted data sent by the terminal that meets the data storage quota.

Optionally, in a case that the satellite covers the gateway station, that is, when the satellite moves into a communication coverage of the gateway station, and the satellite receives the to-be-transmitted data sent by the terminal that meets the data storage quota, the satellite may perform re-authentication processing on the terminal that has already been authenticated. For example, the satellite may perform re-authentication processing based on the first configuration information reported by the terminal, or, the satellite may obtain subscription information corresponding to the terminal that has already been authenticated through the ground network element, and perform authentication based on the subscription information.

In an example, in a case that the satellite moves into the communication coverage of the gateway station, the satellite receives the to-be-transmitted data sent by the terminal that meets the data storage quota, and the terminal that has already been authenticated meets a re-authentication condition, the satellite may perform re-authentication processing on the terminal that has already been authenticated.

Step 504, the to-be-transmitted data is forwarded when it is determined that the terminal passes the re-authentication.

Optionally, when it is determined that the terminal that has already been authenticated passes the re-authentication, the satellite may forward the to-be-transmitted data to the ground network element.

In this embodiment, the terminal may be authenticated again to further improve the security of data transmission.

In an embodiment, the network connection request carries a terminal identifier and a capability of supporting store-and-forward. Optionally, the terminal identifier may be a terminal ID or an IMSI of the terminal.

Accordingly, as shown in FIG. 6, generating the target response message based on the network connection request, and returning the target response message to the terminal may include following step 602 and step 604.

Step 602, it is determined, based on a second configuration policy, the terminal identifier, and the capability of supporting store-and-forward, that the terminal is in a limited transmission state, an on-board store-and-forward data retention period is determined based on an available time of satellite coverage, and an on-board store-and-forward data storage quota is determined.

The second configuration policy may be a pre-configured operator configuration policy, and a specific content of the second configuration policy may be that when the terminal supports the store-and-forward feature, it is determined that the terminal is in a limited transmission state (limited state), and the terminal is allowed to send limited data to the satellite.

Optionally, after receiving the network connection request sent by the terminal, the satellite may determine that the terminal is in the limited transmission state based on the terminal identifier and the capability of supporting store-and-forward reported by the terminal, as well as the pre-configured second configuration policy, and the MME on the satellite may determine the on-board store-and-forward data retention period based on the available time of satellite coverage, and determine the on-board store-and-forward data storage quota.

Step 604, a second request accept response message is returned to the terminal.

The second request accept response message carries the on-board store-and-forward data retention period and the on-board store-and-forward data storage quota, and the target response message may be the second request accept response message.

Optionally, the satellite may generate the second request accept response message based on the determined on-board store-and-forward data retention period and on-board store-and-forward data storage quota.

In an example, the second request accept response message may include a satellite identifier, a bearer identity (ID) and the like. The satellite may return the second request accept response message to the terminal.

In this embodiment, when the terminal supports store-and-forward, the second request accept response message may be returned to the terminal, thereby quickly establishing communication between the terminal and the satellite.

In an embodiment, the communication method further includes: obtaining subscription information of the terminal in a case where the satellite covers the gateway station; and forwarding to-be-transmitted data and updating the limited transmission state of the terminal to an unlimited transmission state when it is determined that the terminal passes authentication based on the subscription information and the to-be-transmitted data sent by the terminal that meets the on-board store-and-forward data storage quota is received.

Optionally, in a case where the satellite covers the gateway station, that is, when the satellite moves into a communication coverage of the gateway station, and the satellite may obtain subscription information of the terminal that is in a limited transmission state, and perform authentication based on the subscription information of the terminal that is in the limited transmission state. Upon determining that the terminal that is in a limited transmission state passes the authentication, and the satellite receives the to-be-transmitted data sent by the terminal that meets the data storage quota, the satellite may forward the received to-be-transmitted data sent by the terminal to a ground network element. Upon determining that the terminal passes the authentication, the satellite updates the limited transmission state of the terminal to an unlimited transmission state.

In this embodiment, when the terminal supports store-and-forward, the second request accept response message may be returned to the terminal, communication between the terminal and the satellite is quickly established. After determining that the terminal has passed the authentication, the satellite forwards the data to the ground network element timely to ensure the reliability of the data transmission.

In an embodiment, after updating the limited transmission state of the terminal to the unlimited transmission state, the communication method further includes: sending a state update message to the terminal when it is detected that the terminal falls within the coverage of the satellite,

Optionally, the state update message is used to indicate that the limited transmission state of the terminal is updated to the unlimited transmission state. Upon determining that the terminal passes the authentication, the satellite may update the limited transmission state of the terminal to the unlimited transmission state. In a case where the terminal moves into the communication coverage of the satellite again, that is, the terminal falls within the coverage of the satellite, the satellite may send the state update message to the terminal. After receiving the state update message, the terminal may determine that the state of the terminal has been updated from the limited transmission state to the unlimited transmission state.

In this embodiment, when the terminal falls within the coverage of the satellite again, the state update message may be returned to the terminal in a timely manner.

In an embodiment, generating the target response message based on the network connection request, and returning the target response message to the terminal may include: generating a request suspend response message based on the satellite being in a store-and-forward mode, the terminal meeting a condition of initial access to the satellite, and the terminal having the capability of supporting store-and-forward; and returning the request suspend response message to the terminal.

The request suspend response message (attach suspend) carries a satellite identifier. The request suspend response message is used to notify the terminal that the network connection request of the terminal is suspended by the satellite.

Optionally, the satellite may determine that the terminal sending the network connection request supports the store-and-forward feature based on the capability of supporting store-and-forward carried in the network connection request. In a case where the satellite is currently in a store-and-forward mode, and the terminal sending the network connection request is a terminal that accesses the satellite for the first time, the satellite may store a terminal identifier and the capability of the terminal, and generate a request suspend response message, and return the request suspend response message to the terminal, indicating that the satellite has suspended the network connection request sent by the terminal.

Optionally, after receiving the request suspend response message sent by the satellite, the terminal may switch to a low power consumption mode, for example, to a power saving mode. In an example, before switching to the power saving mode, the terminal may determine a next wake-up time based on ephemeris information, and after determining the next wake-up time, switch to the power saving mode. When a current time reaches the next wake-up time, the terminal may exit the power saving mode and switch to a regular operating state. The ephemeris information may be a precise position or trajectory table of a celestial body that changes over time, which is a function of time.

In an example, in a case where the satellite covers the gateway station, that is, when a feeder link between the satellite and the ground is available, the MME on the satellite may send a network connection request to a ground network element through a C-SCN-Ground (core network-space core network ground), obtain the subscription information (authentication information) of the terminal through the ground network element, and store the authentication information of the terminal in the satellite.

Optionally, after the terminal is within the coverage of the satellite, it may initiate an attach request again, that is, send the network connection request to the satellite, and the network connection request carries the capability of supporting store-and-forward. In a case where the MME on the satellite determines that it is a terminal that is not accessing the satellite for the first time based on the terminal identifier of the terminal, the satellite may authenticate the terminal based on locally stored authentication information, and send a message to the terminal, the message carries information required for the terminal to authenticate the network, and completes a two-way authentication. In addition, after the terminal is within the coverage of the satellite, it may establish, based on a satellite identifier carried in a reject response message, an RRC connection with a satellite that matches the satellite identifier, and the terminal may initiate an attach request again based on the RRC connection, that is, send the network connection request to the satellite through the RRC connection. After receiving the network connection request, the satellite may perform two-way authentication based on the terminal identifier carried in the network connection request and the authentication information of the terminal stored locally in the satellite.

In this way, after determining that the terminal has passed the authentication, the satellite may accept the network connection request sent by the terminal, determine the data retention period based on the available time of satellite coverage, and determine the data storage quota corresponding to the terminal. The satellite may generate a request accept response message based on the data retention period and the data storage quota, and return the request accept response message to the terminal.

In this embodiment, when the satellite returns the suspend response message to the terminal, reliable communication among the terminal device, the satellite and the ground network element may be achieved. By using the request suspend response message to notify the terminal that the network request has been suspended by the satellite, the terminal may, when it subsequently falls within the coverage of the satellite, initiate a request to re-access the network in a timely manner, thereby improving the flexibility of network access of the terminal.

In an embodiment, generating the target response message based on the network connection request, and returning the target response message to the terminal may include: generating a reject response message based on the satellite being in a store-and-forward mode, the terminal meeting a condition of initial access to the satellite, and the terminal having the capability of supporting store-and-forward; and returning the reject response message to the terminal.

The reject response message carries a reject reason message and a satellite identifier. The request suspend response message is used to indicate that the network request sent by the terminal is suspended.

Optionally, the satellite may determine that the terminal sending the network connection request supports the store-and-forward feature based on the capability of supporting store-and-forward carried in the network connection request. In a case where the satellite is currently in a store-and-forward mode, and the terminal sending the network connection request is a terminal that accesses the satellite for the first time, the satellite may suspend the network connection request corresponding to the terminal, store a terminal identifier and the capability of the terminal, and generate a reject response message carrying a reject reason message and a satellite identifier, and return the reject response message to the terminal. The reject reason message may indicate that the satellite has suspended the network connection request sent by the terminal.

In an example, in a case where the satellite covers the gateway station, that is, when a feeder link between the satellite and the ground is available, the MME on the satellite may send a network connection request to a ground network element through a C-SCN-Ground (core network-space core network ground), obtain the subscription information (authentication information) of the terminal through the ground network element, and store the authentication information of the terminal in the satellite.

Optionally, after the terminal is within the coverage of the satellite, it may initiate an attach request again, that is, send the network connection request to the satellite, and the network connection request carries the capability of supporting store-and-forward. In a case where the MME on the satellite determines that it is a terminal that is not accessing the satellite for the first time based on the terminal identifier of the terminal, the satellite may authenticate the terminal based on locally stored authentication information, and send a message to the terminal, the message carries information required for the terminal to authenticate the network, and completes a two-way authentication. In addition, after the terminal is within the coverage of the satellite, it may establish, based on a satellite identifier carried in a reject response message, an RRC connection with a satellite that matches the satellite identifier, and the terminal may initiate an attach request again based on the RRC connection, that is, send the network connection request to the satellite through the RRC connection. After receiving the network connection request, the satellite may perform two-way authentication based on the terminal identifier carried in the network connection request and the authentication information of the terminal stored locally in the satellite.

In this way, after determining that the terminal has passed the authentication, the satellite may accept the network connection request sent by the terminal, determine the data retention period based on the available time of satellite coverage, and determine the data storage quota corresponding to the terminal. The satellite may generate a request accept response message based on the data retention period and the data storage quota, and return the request accept response message to the terminal.

In this embodiment, through multiple requests between the terminal and the satellite, the IoT terminal device may register with the network through the satellite with the on-board store-and forward feature, thereby realizing communication between the terminal device and the ground through the satellite and improving communication reliability.

In an embodiment, the communication method further includes: sending a broadcast message.

The broadcast message is used to instruct the terminal to connect to the satellite.

Optionally, the satellite may send the broadcast message within the communication coverage of the satellite. After being powered on, the terminal may search for the network and camp on it. After receiving the broadcast message sent by the satellite, the terminal may parse the broadcast message, send the network connection request to the satellite.

In an example, the broadcast message includes the store-and-forward feature and/or the satellite ID. The store-and-forward feature indicates that the satellite is in an onboard store-and-forward mode, that is, a satellite that may perform a store-and-forward satellite operation (SandF Satellite Operation). For example, a base station or part of core network elements may be deployed on the satellite, and the terminal establishes a service link with the satellite to transmit signaling or data. When the satellite moves to establish the feeder link with the ground, the signaling or data may be exchanged with a ground core network through a gateway station. The satellite ID represents an identifier of the satellite, such as a satellite serial number.

In an example, the terminal may obtain the store-and-forward feature and satellite ID carried in the broadcast message, or, the terminal may obtain the store-and-forward feature carried in the broadcast message, or, the terminal may obtain the satellite ID carried in the broadcast message.

In an embodiment, the target response message further carries a satellite return time.

Optionally, the satellite return time may be a time when the satellite flies back next time. The terminal may re-initiate a network connection request to the satellite based on the satellite return time carried in the target response message when the satellite return time is reached or after an interval of the satellite return time. For example, the reject response message may further carry the satellite return time, or, the request suspend response message may further carry the satellite return time.

In this embodiment, it allows the terminal to initiate the network connection request to the satellite accurately and in a timely manner after the satellite return time is reached.

A specific implementation process of the above communication method in a specific disclosure scenario is described in detail below with reference to specific embodiments.

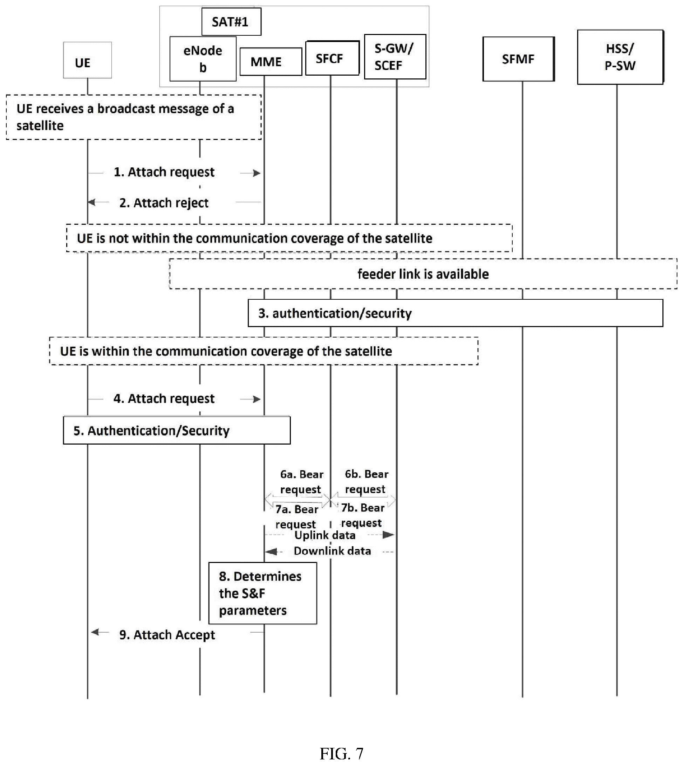

In an example, as shown in FIG. 7, a terminal may send a store-and-forward request during a registration process. MME/AMF may first suspend the request, and after a feeder link is available, obtain and store subscription/authentication information of the terminal on the satellite. Next, the terminal may initiate a registration request, and the MME/AMF may directly complete the authentication.

The following is illustrated by taking an Evolved Packet System (EPS) architecture as a case where this disclosure is applied. The EPS architecture includes user equipment (UE), a satellite (SAT) and ground network elements. The ground network elements include an SFMF and an HSS/P-SW. The satellite includes an evolved Node B (eNodeB), a mobile management entity (MME), an SFCF, and a serving gateway (S-GW/SCEF).

Optionally, there are multiple ways to deploy the functions of all network elements on the satellite, which may be new network elements or enhancements to existing network elements.

Optionally, for a 5GC, part of AUSF authentication functions may also be configured on the satellite. As shown in FIG. 7, the communication method may include the following steps.

S0, UE receives a broadcast message of a satellite (e.g., UE receives SIB of a SAT#1). Optionally, the UE powers on, search for a network and camps on it, and receives a broadcast message from a satellite eNB. The broadcast message carries a store-and-forward feature and/or a satellite ID.

S1, UE sends a network connection request (e.g., an attach request). Optionally, when the UE needs to register with the network, it may send a network connection request to an on-board MME. Optionally, the network connection request may carry an indication of "supporting a store-and-forward feature".

Optionally, when the UE indicates support for EPS connection without a PDN session, or for SMS only, steps S6 and S7 may be skipped, and communication between the UE and the satellite is achieved without establishing a bearer session. For EPS attach without PDN connectivity, or SMS only, S6 and S7 are skipped.

S2, a reject response message (e.g., an attach reject) is returned. Optionally, the onboard MME may, based on that the satellite is currently in a store-and-forward mode, the UE is in an initial access, and the UE supports a store-and-forward feature, determine to suspend the network connection request (attach request) of the UE, store a terminal identifier (e.g., a device identifier, IMSI) of the UE and its corresponding UE capability, and send a reject response message (attach reject) to the UE.

In a case where the satellite has broadcasted a SandF mode (on-board store-and-forward mode), the reject response message carries a reject reason and a satellite ID. The reject reason may be that the network connection request is suspended. Carrying the satellite ID can facilitate the UE in finding the satellite again for registration next time.

Optionally, the reject response message may further carry a time when the satellite flies back next time, so that the UE may apply for the same satellite again after a timer expires. In a case where the terminal finds another suitable target satellite before the timer expires, the UE may send a network connection request to the target satellite.

S3, the satellite covers a gateway station, that is, the feeder link is available, and identity authentication or authentication processing (authentication/security) is performed. Optionally, the MME may send the network connection request of the UE to the HSS through a C-SCN-Ground, obtain subscription information (authentication information) of the UE, and send the authentication information of the UE back to the satellite and store it in the MME or another storage device.

S4, when the UE is within the communication coverage of the satellite, the UE sends a network connection request (attach request) to the satellite again. Optionally, when the UE is within the coverage, it establishes an RRC connection with the target satellite based on the satellite ID and initiates an attach request again, indicating that "store-and-forward feature is supported".

Optionally, when the UE indicates support for EPS connection without a PDN session, or for SMS only, steps S6 and S7 may be skipped, and communication between the UE and the satellite is achieved without establishing a bearer session. For EPS attach without PDN connectivity, or SMS only, steps S6 and S7 are skipped.

S5, MME completes two-way authentication (authentication/security) based on the IMSI of the UE and the stored authentication information.

S6, optionally, the MME sends a create session request to the SFCF, and the SFCF sends a create session request to the S-GW/SCEF. That is, the MME establishes a bearer session with the SFCF, and the SFCF establishes a bearer session with the S-GW/SCEF. Optionally, the MME sends a create task request to establish a bearer. If Control Plane CIoT EPS Optimisation applies, then the MME shall also indicate S11-U tunnelling of NAS user data and send its own S11-U IP address and MME DL TEID for DL data forwarding by the SGW.

S7, optionally, the S-GW/SCEF sends a create session response message to the SFCF, and the SFCF sends a create session response message to the MME. Optionally, the S-GW determines an on-board store-and-forward data storage quota (SandF data storage quota) based on a requested data counter (data counter) and an on-board memory.

S8, on-board store-and-forward parameters (SandF parameters) are determined. Optionally, the MME accepts the network connection request. Optionally, the MME may determine an on-board store-and-forward data retention period (SandF data retention period) based on an available time of satellite coverage, and encapsulate the on-board store-and-forward data retention period and the on-board store-and-forward data storage quota into NAS information.

S9, MME sends a request accept response message (attach accept response) to the UE. Optionally, the request accept response message carries the satellite ID, the SandF data retention period, the SandF data storage quota, a bearer ID and the like.

In another example, the terminal may send a store-and-forward request during a registration process. MME/AMF may first suspend the request, and after a feeder link is available, obtain and store subscription/authentication information of the terminal on the satellite. Next, the terminal may initiate a registration request, and the MME/AMF may directly complete such operation as authentication. The following is an example of applying this disclosure to an EPS architecture, and the communication method may include the following steps.

Step 0, UE receives a broadcast message of a satellite (e.g., UE receives SIB of a SAT#1). Optionally, the UE powers on, search for a network and camps on it, and receives a broadcast message from a satellite eNB. The broadcast message does not carry a satellite ID and a store-and-forward mode (SandF mode).

Step 10, UE sends a network connection request (e.g., an attach request). Optionally, when the UE needs to register with the network, it may send a network connection request to an on-board MME. Optionally, the network connection request may carry an indication of "supporting a store-and-forward feature". Optionally, when the UE indicates support for EPS connection without a PDN session, or for SMS only, step 60 and step 70 may be skipped, and communication between the UE and the satellite is achieved without establishing a bearer session. For EPS attach without PDN connectivity, or SMS only, step 60 and step 70 are skipped.

Step 20, a reject response message (e.g., an attach reject) is returned. Optionally, the onboard MME may, based on that the satellite is currently in a store-and-forward mode, the UE is in an initial access, and the UE supports a store-and-forward feature, determine to suspend the network connection request (attach request) of the UE, store a terminal identifier (e.g., a device identifier, IMSI) of the UE and its corresponding UE capability, and send a reject response message (attach reject) to the UE.

In a case where the UE supports on-board store-and-forward, a reject response message is sent to the UE, the reject response message carries a reject reason and a satellite ID. The reject reason may be an S&F mode and the attach request is suspended (the network connection request is suspended). Carrying the satellite ID can facilitate the UE in finding the satellite again for registration next time. In a case where the UE does not support on-board store-and-forward, the satellite directly sends a reject response message to the terminal. That is, when the UE does not support S&F capability, it is directly rejected.

Step 30, the satellite covers a gateway station, that is, the feeder link is available, and identity authentication or authentication processing (authentication/security) is performed. Optionally, the MME may send the network connection request of the UE to a ground network element (for example, to the HSS via the SFMF), obtain subscription information (authentication information) of the UE, and send the authentication information of the UE back to the satellite and store it in the MME or another storage device.

Step 40, when the UE is within the communication coverage of the satellite, the UE sends a network connection request (attach request) to the satellite again. Optionally, when the UE is within the coverage, it establishes an RRC connection with the target satellite based on the satellite ID and initiates an attach request again, indicating that "store-and-forward feature is supported".

Optionally, when the UE indicates support for EPS connection without a PDN session, or for SMS only, step 60 and step 70 may be skipped, and communication between the UE and the satellite is achieved without establishing a bearer session. For EPS attach without PDN connectivity, or SMS only, step 60 and step 70 are skipped.

Step 50, in a case where the MME determines, based on the device identifier IMSI, that the IMSI of the UE is the same as that of UE that has previously requested service, the MME may perform authentication and authorization on the terminal based on the subscription information obtained in step 30; and send to the UE the information required for the UE to authenticate the network, thereby completing two-way authentication.

Step 60, optionally, the MME sends a create session request to the SFCF, and the SFCF sends a create session request to the S-GW/SCEF. That is, the MME establishes a bearer session with the SFCF, and the SFCF establishes a bearer session with the S-GW/SCEF. Optionally, the MME sends a create task request to establish a bearer. If Control Plane CIoT EPS Optimisation applies, then the MME shall also indicate S11-U tunnelling of NAS user data and send its own S11-U IP address and MME DL TEID for DL data forwarding by the SGW.

Step 70, optionally, the S-GW/SCEF sends a create session response message to the SFCF, and the SFCF sends a create session response message to the MME. Optionally, the S-GW determines an on-board store-and-forward data storage quota (SandF data storage quota) based on a requested data counter (data counter) and an on-board memory.

Step 80, on-board store-and-forward parameters (SandF parameters) are determined. Optionally, the MME accepts the network connection request. Optionally, the MME may determine an on-board store-and-forward data retention period (SandF data retention period) based on an available time of satellite coverage, and encapsulate the on-board store-and-forward data retention period and the on-board store-and-forward data storage quota into NAS information.

Step 90, MME sends an attach accept response to the UE. Optionally, the request accept response message carries the satellite ID, the SandF data retention period, the SandF data storage quota, a bearer ID and the like.

In another example, a request suspend (e.g., an attach suspend) may be introduced into a terminal network access procedure. The following description takes an EPS architecture as an example for illustration, and the communication method may include the following steps.

Step 0, UE receives a broadcast message of a satellite (e.g., UE receives SIB of a SAT#1). Optionally, the UE powers on, search for a network and camps on it, and receives a broadcast message from a satellite eNB. The broadcast message carries a store-and-forward feature and/or a satellite ID.

Step 1, UE sends a network connection request (e.g., an attach request). Optionally, when the UE needs to register with the network, it may send a network connection request to an on-board MME. Optionally, the network connection request may carry an indication of "supporting a store-and-forward feature".

Optionally, when the UE indicates support for EPS connection without a PDN session, or for SMS only, step 6 and step 7 may be skipped, and communication between the UE and the satellite is achieved without establishing a bearer session. For EPS attach without PDN connectivity, or SMS only, step 6 and step 7 are skipped.

Step 2, a request suspend response message (e.g., attach suspend) is returned. Optionally, the onboard MME may, based on that the satellite is currently in a store-and-forward mode, the UE is in an initial access, and the UE supports a store-and-forward feature, determine to suspend the network connection request (attach request) of the UE, store a terminal identifier (e.g., a device identifier, IMSI) of the UE and its corresponding UE capability, and send a request suspend response message (attach suspend) to the UE, indicating to the UE that the attach request has been suspended. The request suspend response message may further carry the satellite ID, so that the UE can find the satellite again for registration next time.

Optionally, the reject response message may further carry a time when the satellite flies back next time, so that the UE may apply for the same satellite again after a timer expires. In a case where the terminal finds another suitable target satellite before the timer expires, the UE may send a network connection request to the target satellite.

Optionally, after receiving the request suspend response message sent by the satellite, the UE may switch to a low power consumption mode, for example, to a power saving mode. In an example, before switching to the power saving mode, the UE may determine a next wake-up time based on ephemeris information, and after determining the next wake-up time, switch to the power saving mode. When a current time reaches the next wake-up time, the UE may exit the power saving mode and switch to a regular operating state. The ephemeris information may be a precise position or trajectory table of a celestial body that changes over time, which is a function of time.

Step 3, the satellite covers a gateway station, that is, the feeder link is available, and identity authentication or authentication processing (authentication/security) is performed. Optionally, the MME may send the network connection request of the UE via a ground network element, obtain subscription information (authentication information) of the UE, and send the authentication information of the UE back to the satellite and store it in the MME or another storage device. For example, the authentication information may be sent to the HSS through the SFMF, thereby to obtain the authentication information of the UE.

Step 4, when the UE is within the communication coverage of the satellite, the terminal may establish an RRC connection with the target satellite based on the satellite ID and initiate a network connection request (attach request) again. The network connection request carries identification information indicating that "store-and-forward feature is supported".

The implementation process of step 5 to step 9 is the same as the implementation process of S5-S9 provided in the above embodiment, and the description thereof is omitted herein.

In another example, a request suspend (e.g., an attach suspend) may be introduced into a terminal network access procedure. The following description takes an EPS architecture as an example for illustration, and the communication method may include the following steps.

Step 0, UE receives a broadcast message of a satellite (e.g., UE receives SIB of a SAT#1). Optionally, the UE powers on, search for a network and camps on it, and receives a broadcast message from a satellite eNB. The broadcast message does not carry a satellite ID and a store-and-forward mode (SandF mode).

Step 1, UE sends a network connection request (attach request). Optionally, when the UE needs to register with the network, it may send a network connection request to an on-board MME. Optionally, the network connection request may carry an indication of "supporting a store-and-forward feature". Optionally, when the UE indicates support for EPS connection without a PDN session, or for SMS only, step 6 and step 7 may be skipped, and communication between the UE and the satellite is achieved without establishing a bearer session. For EPS attach without PDN connectivity, or SMS only, step 6 and step 7 are skipped.

Step 2, a request suspend response message (attach suspend) is returned. Optionally, the onboard MME may, based on that the satellite is currently in a store-and-forward mode, the UE is in an initial access, and the UE supports a store-and-forward feature, determine to suspend the network connection request (attach request) of the UE, store a terminal identifier (e.g., a device identifier, IMSI) of the UE and its corresponding UE capability, and send a request suspend response message (attach suspend) to the UE, indicating to the UE that the attach request has been suspended. The request suspend response message may further carry the satellite ID, so that the UE can find the satellite again for registration next time.

Optionally, the reject response message may further carry a time when the satellite flies back next time, so that the UE may apply for the same satellite again after a timer expires. In a case where the terminal finds another suitable target satellite before the timer expires, the UE may send a network connection request to the target satellite.

Optionally, after receiving the request suspend response message sent by the satellite, the UE may switch to a low power consumption mode, for example, to a power saving mode. In an example, before switching to the power saving mode, the UE may determine a next wake-up time based on ephemeris information, and after determining the next wake-up time, switch to the power saving mode. When a current time reaches the next wake-up time, the UE may exit the power saving mode and switch to a regular operating state. The ephemeris information may be a precise position or trajectory table of a celestial body that changes over time, which is a function of time.

The implementation process of step 3 to step 9 is the same as the implementation process of step 30 to step 90 provided in the above embodiment, and the description thereof is omitted herein.

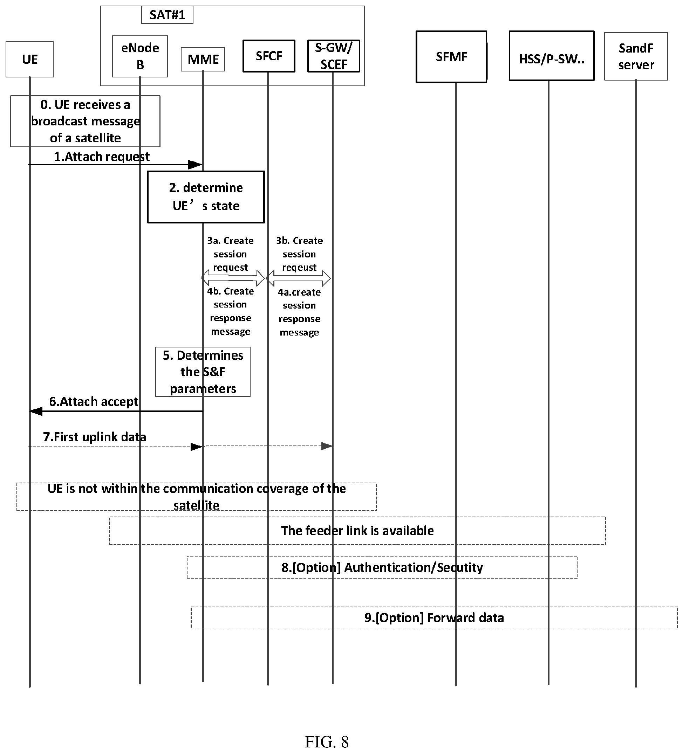

In another example, as shown in FIG. 8, it may be a limited transmission. UE may send a store-and-forward request during a registration process. MME/AMF directly accepts the request of the UE based on the reported store-and-forward feature, and indicates that the UE is in a limited state and may send limited data. After a feeder link is available, if necessary, the satellite device sends the request of the UE to the ground such as UDM/SMSF. In a case where the authentication is successful, the data is sent. The following description takes EPS as an example for illustration, including user equipment (UE), a satellite (SAT) and ground network elements. The ground network elements include an SFMF, an HSS/P-SW and a SandF server (S&F server). The satellite includes an evolved Node B (eNodeB), a mobile management entity (MME), an SFCF and a service gateway S-GW/SCEF.

Optionally, for 5GC, part of AUSF authentication functions may also be configured on the satellite. The communication method may include the following steps.

Step 0, UE receives a broadcast message of a satellite (e.g., UE receives SIB of a SAT#1). Optionally, the UE powers on, search for a network and camps on it, and receives a broadcast message from a satellite eNB. The broadcast message carries a store-and-forward feature and/or a satellite ID.

Step 1, UE sends a network connection request (e.g., an attach request). Optionally, when the UE wants to transmit information through the network, it may send a network connection request to an on-board MME. Optionally, the network connection request may carry a terminal identifier (IMSI) and an indication of "supporting a store-and-forward feature".

Optionally, when the UE indicates support for EPS connection without a PDN session, or for SMS only, steps step 3 and step 4 may be skipped, and communication between the UE and the satellite is achieved without establishing a bearer session. For EPS attach without PDN connectivity, or SMS only, step 3 and step 4 are skipped.

Step 2, a state of the UE is determined. Optionally, since the satellite does not have subscription and/or security information of the UE locally, the MME on the satellite may determine that the UE may be in a limited transmission state (limited state) based on the IMSI and "supporting a store-and-forward feature" reported by the UE, as well as the operator configuration policy ( the second configuration policy). That is, the satellite supports the UE to send limited data.

Optionally, after the MME locally stores such information as the terminal identifier and terminal capability, if the feeder link is available, the UE may obtain subscription and/or security information from the ground network element such as the HSS, and the satellite may update the limited transmission state of the UE to an unlimited transmission state.

When the UE indicates support for EPS connection without a PDN session, or for SMS only, step 3 and step 4 may be skipped, and communication between the UE and the satellite is achieved without establishing a bearer session. For EPS attach without PDN connectivity, or SMS only, step 3 and step 4 are skipped.

Step 3, optionally, the MME sends a create session request to the SFCF, and the SFCF sends a create session request to the S-GW/SCEF. That is, the MME establishes a bearer session with the SFCF, and the SFCF establishes a bearer session with the S-GW/SCEF. Optionally, the MME sends a create task request to establish a bearer. If Control Plane CIoT EPS Optimisation applies, then the MME shall also indicate S11-U tunnelling of NAS user data and send its own S11-U IP address and MME DL TEID for DL data forwarding by the SGW.

Step 4, optionally, the S-GW/SCEF sends a create session response message to the SFCF, and the SFCF sends a create session response message to the MME. Optionally, the S-GW determines an on-board store-and-forward data storage quota (SandF data storage quota) based on a requested data counter (data counter) and an on-board memory.

Step 5, on-board store-and-forward parameters (SandF parameters) are determined. Optionally, the MME may determine an on-board store-and-forward data retention period (SandF data retention period), which may also be duration of an unavailability period (Unavailability Period Duration), based on an available time of satellite coverage. Optionally, when the UE is determined to be in a limited state, the MME determines a SandF data storage quota that the UE is allowed to transmit, where the data storage quota is a quantity of data transmitted by the terminal allowed by the satellite and a size of each data.

Step 6, MME sends an attach accept response to the UE. Optionally, the request accept response message carries the satellite ID, the SandF data retention period, the SandF data storage quota, a bearer ID and the like.

Step 7, uplink data (first uplink data) is sent. Optionally, in a case where the UE needs to transmit urgent data, the UE may send data that meets the quota to the on-board device (MME or S-GW if the session is established, or a new network element device), and the on-board device associates the data with the IMSI of the UE for storage.

Step 8, identity authentication is performed. Optionally, the satellite covers the gateway station, that is, the feeder link is available. For the terminal in the limited transmission state, the MME may send the request of the UE request to the HSS through the ground network element, obtain the subscription information and/or security information of the UE, and return it to the MME. In a case where the authentication is completed, the MME may remove the restriction of the limited state of the UE. If the UE falls within the coverage of the satellite again, the satellite may return a state update to the UE.

Step 9, optionally, the onboard device forwards the received data of the UE to the ground.

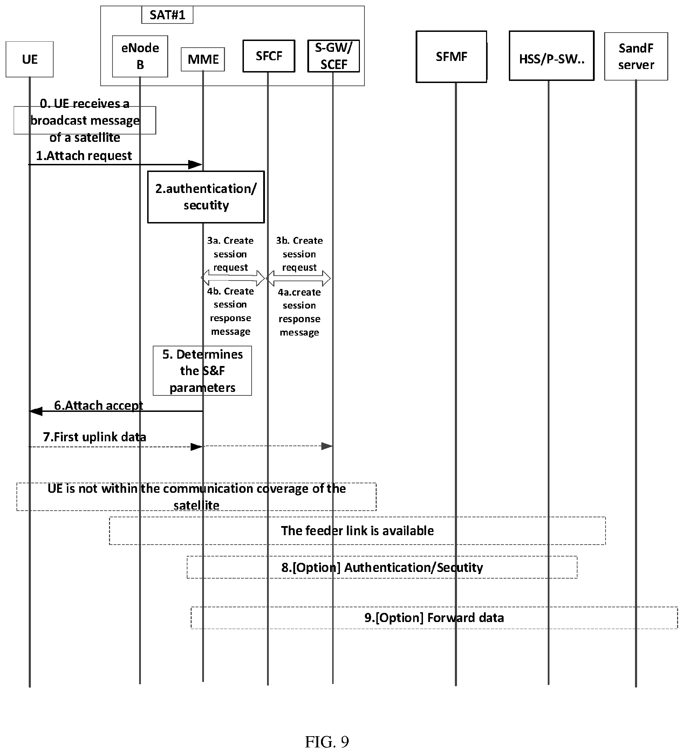

In another example, as shown in FIG. 9, it may be a direct transmission. UE may send such information as security information to a network during a registration process. MME/AMF directly accepts the request of the UE based on the reported information and UE capability. If necessary, the onboard device sends the request of the UE to the ground such as UDM/SMSF. In a case where the authentication is successful, the data is sent.

The following description takes EPS as an example for illustration, including user equipment (UE), a satellite (SAT) and ground network elements. The ground network elements include an SFMF, an HSS/P-SW and a SandF server (S&F server). The satellite includes an evolved Node B (eNodeB), a mobile management entity (MME), an SFCF and a service gateway S-GW/SCEF.

Optionally, for 5GC, part of AUSF authentication functions may also be configured on the satellite. The communication method may include the following steps.

Step 0, UE receives a broadcast message of a satellite (e.g., UE receives SIB of a SAT#1). Optionally, the UE powers on, search for a network and camps on it, and receives a broadcast message from a satellite eNB. The broadcast message carries a store-and-forward feature and/or a satellite ID.

Step 1, UE sends a network connection request (e.g., an attach request). Optionally, when the UE wants to transmit information through the network, it may send a network connection request to an on-board MME. Optionally, the network connection request may carry a terminal identifier (IMSI), an indication of "supporting a store-and-forward feature" and UE information.

Optionally, when the UE indicates support for EPS connection without a PDN session, or for SMS only, steps step 3 and step 4 may be skipped, and communication between the UE and the satellite is achieved without establishing a bearer session. For EPS attach without PDN connectivity, or SMS only, step 3 and step 4 are skipped.

Step 2, identity authentication is performed. MME may perform identity authentication on the UE based on the IMSI and "supporting a store-and-forward feature" reported by the UE, a first configuration policy, and first configuration information reported by the UE. For example, it may be determined that the terminal is allowed to access the network. Optionally, when the UE indicates support for EPS connection without a PDN session, or for SMS only, step 9 and step 10 may be skipped, and communication between the UE and the satellite is achieved without establishing a bearer session. For EPS attach without PDN connectivity, or SMS only, step 3 and step 4 are skipped.

Optionally, when the UE indicates support for EPS connection without a PDN session, or for SMS only, step 3 and step 4 may be skipped, and communication between the UE and the satellite is achieved without establishing a bearer session. For EPS attach without PDN connectivity, or SMS only, step 3 and step 4 are skipped.

Step 3, optionally, the MME sends a create session request to the SFCF, and the SFCF sends a create session request to the S-GW/SCEF. That is, the MME establishes a bearer session with the SFCF, and the SFCF establishes a bearer session with the S-GW/SCEF. Optionally, the MME sends a create task request to establish a bearer. If Control Plane CIoT EPS Optimisation applies, then the MME shall also indicate S11-U tunnelling of NAS user data and send its own S11-U IP address and MME DL TEID for DL data forwarding by the SGW.

Step 4, optionally, the S-GW/SCEF sends a create session response message to the SFCF, and the SFCF sends a create session response message to the MME. Optionally, the S-GW determines an on-board store-and-forward data storage quota (SandF data storage quota) based on a requested data counter and an on-board memory.

Step 5, on-board store-and-forward parameters (SandF parameters) are determined. Optionally, the MME may determine an on-board store-and-forward data retention period (SandF data retention period), which may also be duration of an unavailability period (Unavailability Period Duration), based on an available time of satellite coverage. Optionally, when the UE reports information and establishes a session, the on-board store-and-forward data retention period and the on-board store-and-forward data storage quota are encapsulated into the NAS information.

Step 6, MME sends an attach accept response to the UE. Optionally, the request accept response message carries the satellite ID, the SandF data retention period, the SandF data storage quota, a bearer ID and the like.

Step 7, uplink data (first uplink data) is sent. Optionally, in a case where the UE needs to transmit urgent data, the UE may send data that meets the quota to the on-board device (MME or S-GW if the session is established, or a new network element device), and the on-board device associates the data with the IMSI of the UE for storage.

Step 8, identity authentication is performed. Optionally, the satellite covers the gateway station, that is, the feeder link is available. In a case where re-authentication is required, re-authentication is performed on the UE that already been authenticated, otherwise step 8 may be skipped.

Step 9, optionally, the onboard device forwards the received data of the UE to the ground.

In the communication method of the embodiments of this disclosure, the IoT terminal devices may register to the network through a satellite with onboard store-and-forward feature, so that even devices in remote areas can connect to the network and send data, providing effective communication guarantees for research institutions, government departments and the like, and providing strong support for the vision of ubiquitous communications.

As can be appreciated, although various steps in the flowcharts involved in the above embodiments are shown in sequence as indicated by arrows, these steps are not necessarily executed in the order indicated by the arrows. Unless explicitly stated otherwise herein, the execution of these steps is not strictly limited to the order, and the steps may be executed in other orders. Moreover, at least part of the steps in the flowcharts involved in the above embodiments may include multiple sub-steps or multiple stages. These sub-steps or stages are not necessarily completed at the same time, but may be executed at different times, and the order of execution is also not necessarily performed sequentially, but may be performed in turn or alternately with at least part of other steps or sub-steps or stages of other steps.

Based on a same inventive concept, embodiments of this disclosure further provide a communication device for implementing the above-mentioned communication method. The implementation scheme for solving the problem provided by the device is similar to the implementation scheme recorded in the above method, so for specific limitations in one or more embodiments of the communication device provided below, reference may be made to the limitations in the above-mentioned communication method, and thus the description thereof is omitted herein.

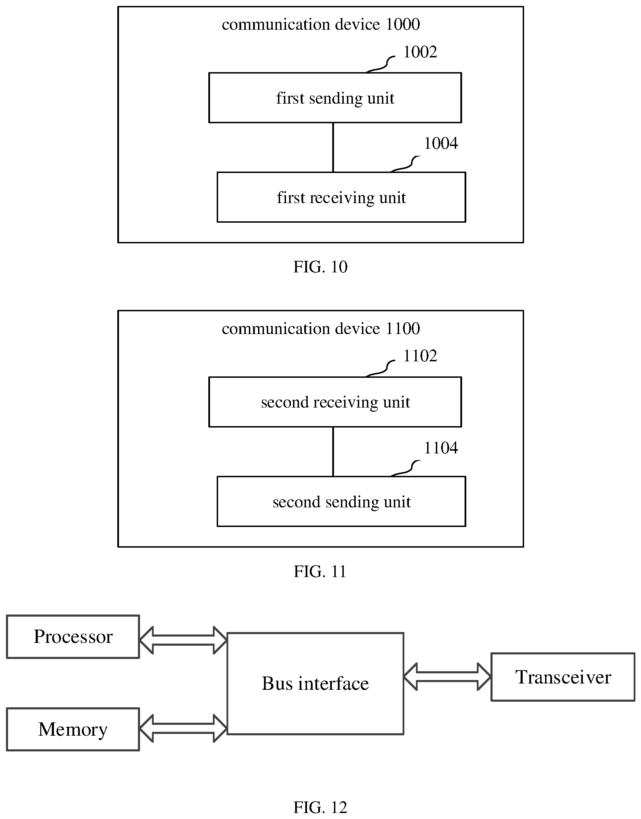

In an embodiment, as shown in FIG. 10, a communication device 1000 is provided, which is applied to a terminal and includes:
a first sending unit 1002, configured to send a network connection request to a satellite, in which the network connection request is used to instruct the terminal to establish a network connection with the satellite; and
a first receiving unit 1004, configured to receive a target response message returned to the terminal by a device on the satellite.

In some embodiments, the network connection request includes a capability of supporting store-and-forward and a terminal identifier.

In some embodiments, the first receiving unit is specifically configured to: receive a first request accept response message returned to the terminal by the device on the satellite, in which the first request accept response message carries an on-board store-and-forward data retention period and an on-board store-and-forward data storage quota, and the first request accept response message is generated by the satellite after determining that the terminal is in a network-accessible state based on the terminal identifier and the capability of supporting store-and-forward.

In some embodiments, the network connection request includes a capability of supporting store-and-forward and a terminal identifier, and the first receiving unit is specifically configured to: receive a second request accept response message returned to the terminal by the device on the satellite, in which the second request accept response message carries an on-board store-and-forward data retention period and an on-board store-and-forward data storage quota, and the second request accept response message is generated by the satellite after determining that the terminal is in a limited transmission state based on a second configuration policy, the terminal identifier, and the capability of supporting store-and-forward.

In some embodiments, the network connection request includes a capability of supporting store-and-forward, and the first receiving unit is specifically configured to: receive a request suspend response message returned to the terminal by the device on the satellite, in which the request suspend response message is generated by the device on the satellite based on the satellite being in a store-and-forward mode, the terminal meeting a condition of initial access to the satellite, and the terminal having the capability of supporting store-and-forward; and the request suspend response message carries a satellite identifier.

In some embodiments, the network connection request includes a capability of supporting store-and-forward, and the first receiving unit is specifically configured to: receive a reject response message returned to the terminal by the device on the satellite, in which the reject response message is generated by the device on the satellite based on the satellite being in a store-and-forward mode, the terminal meeting a condition of initial access to the satellite, and the terminal having the capability of supporting store-and-forward; the reject response message carries a reject reason message and a satellite identifier.

In some embodiments, the first receiving unit is further configured to receive a satellite broadcast message.

In some embodiments, the first receiving unit is further configured to send to-be-transmitted data that meets the data storage quota to the satellite.

In an embodiment, as shown in FIG. 11, a communication device 1100 is provided, which is applied to a satellite and includes:
a second receiving unit 1102, configured to receive a network connection request sent by a terminal, wherein the network connection request is used to instruct the terminal to establish a network connection with the satellite; and
a second sending unit 1104, configured to generate a target response message based on the network connection request, and return the target response message to the terminal.

In some embodiments, the network connection request carries a terminal identifier and a capability of supporting store-and-forward.

In some embodiments, the second sending unit is specifically configured to:
determine that the terminal is in a network accessible state based on the terminal identifier and the capability of supporting store-and-forward, determine an on-board store-and-forward data retention period based on an available time of satellite coverage, and determine an on-board store-and-forward data storage quota; and
return a first request accept response message to the terminal, in which the first request accept response message carries the on-board store-and-forward data retention period and the on-board store-and-forward data storage quota.

In some embodiments, the communication device further includes: a forwarding unit, configured to forward to-be-transmitted data in a case where the satellite covers a gateway station and receives the to-be-transmitted data sent by the terminal that meets a data storage quota.

In some embodiments, the forwarding unit is specifically configured to:
perform re-authentication processing on the terminal in a case where the satellite covers the gateway station and receives the to-be-transmitted data sent by the terminal that meets the data storage quota; and
forward the to-be-transmitted data when it is determined that the terminal passes the re-authentication.

In some embodiments, the network connection request carries the terminal identifier and a capability of supporting store-and-forward, and the second sending unit is specifically configured to:
determine, based on a second configuration policy, the terminal identifier, and the capability of supporting store-and-forward, that the terminal is in a limited transmission state, determine an on-board store-and-forward data retention period based on an available time of satellite coverage, and determine an on-board store-and-forward data storage quota; and
return a second request accept response message to the terminal, in which the second request accept response message carries the on-board store-and-forward data retention period and the on-board store-and-forward data storage quota.

In some embodiments, the forwarding unit is specifically configured to:
obtain subscription information of the terminal in a case where the satellite covers the gateway station; and
forward to-be-transmitted data and update the limited transmission state of the terminal to an unlimited transmission state when it is determined that the terminal passes authentication based on the subscription information and the to-be-transmitted data sent by the terminal that meets the on-board store-and-forward data storage quota is received.

In some embodiments, the communication device further includes: an updating unit, configured to send a state update message to the terminal when it is detected that the terminal falls within the coverage of the satellite, in which the state update message is used to indicate that the limited transmission state of the terminal is updated to the unlimited transmission state.

In some embodiments, the second sending unit is specifically configured to:
generate a request suspend response message based on the satellite being in a store-and-forward mode, the terminal meeting a condition of initial access to the satellite, and the terminal having the capability of supporting store-and-forward; and
return the request suspend response message to the terminal, in which the request suspend response message carries a satellite identifier.

In some embodiments, the second sending unit is specifically configured to:
generate a reject response message based on the satellite being in a store-and-forward mode, the terminal meeting a condition of initial access to the satellite, and the terminal having the capability of supporting store-and-forward; and
return the reject response message to the terminal, in which the reject response message carries a reject reason message and a satellite identifier.

In some embodiments, the second sending unit is further configured to send a broadcast message, in which the broadcast message is used to instruct the terminal to connect to the satellite.

It should be noted that the division of units in the embodiments of this disclosure is schematic and only serves as a division of logical functions, and there may be other division methods in actual implementations. In addition, in the embodiments of this disclosure, various functional units may be integrated into a single processing unit, or the various units may be physically separated, or two or more units may be integrated into one unit. The integrated unit in the above may be implemented in the form of hardware or may be implemented in the form of software functional units.

If the integrated unit is implemented in the form of software functional units and sold or used as an independent product, it may be stored in a processor readable storage medium. Based on this understanding, essence of the technical solutions of this disclosure, or the part thereof contributing to the related technologies, or part or all of the technical solutions, may be embodied in the form of a software product. The computer software product is stored in a storage medium, and includes a number of instructions to enable a computer device (which may be a personal computer, a server, or a network device, etc.) or a processor to perform all or part of the steps of method described in the various embodiments of the present disclosure.

It should be noted that the above-mentioned device provided in the embodiments of this disclosure is capable of implementing all method steps in the method implemented in the above method embodiments, and is capable of achieving the same technical effects. Therefore, the description and beneficial effects of this embedment that are the same as those of the method embodiments, which will not be further elaborated in detail.

In an embodiment, a communication device is provided, which may be the terminal device or the network device, and its internal structure may be as shown in FIG. 12. The communication device includes a memory, a transceiver, and a processor.

The transceiver is used to receive and send data under the control of the processor.

In FIG. 12, a bus architecture may include any quantity of interconnected buses and bridges, and connects various circuits including one or more processors represented by the processor and memory represented by the memory. The bus architecture may also connect various other circuits such as peripherals, voltage regulators and power management circuits, which is well known in the art. Therefore, a detailed description thereof is omitted herein. A bus interface provides an interface. The transceiver may be multiple elements, i.e., a transmitter and a receiver, to allow for communication with various other apparatuses on transmission medium, the transmission medium include wireless channels, wired channels, optical cables, and other transmission medium. The processor is responsible for supervising the bus architecture and normal operation and the memory may store the data being used by the processor during operation.

The processor may be a central processing unit (CPU), an application specific integrated circuit (ASIC), a field-programmable gate array (FPGA) or a complex programmable logic device (CPLD). The processor may also adopt a multi-core architecture.

The processor is configured to execute any of the methods provided in the embodiments of this disclosure according to the obtained executable instructions by calling a program stored in the memory. The processor and memory may also be arranged to be separated physically.

It should be noted that the above device provided in the embodiments of this disclosure is capable of implementing all method steps in the method implemented in the above method embodiments, and is capable of achieving the same technical effects. Therefore, the description and beneficial effects of this embedment that are the same as those of the method embodiments, which will not be further elaborated in detail.

A physical device corresponding to the terminal device or network device is shown in FIG. 12, which is capable of implementing all the method steps in the method implemented in the above method embodiments on the terminal device or network device side, and is capable of achieving the same technical effects. Therefore, the description and beneficial effects of this embedment that are the same as those of the method embodiments, which will not be further elaborated in detail.

It should be noted that the above-mentioned device provided in the embodiments of this disclosure is capable of implementing all method steps in the method implemented in the above method embodiments, and is capable of achieving the same technical effects. Therefore, the description and beneficial effects of this embedment that are the same as those of the method embodiments, which will not be further elaborated in detail.

In an embodiment, a network device is provided, including a memory and a processor, a computer program is stored in the memory, and the computer program, when executed by the processor, causes the processor to implement the steps in the above-mentioned method embodiments.

In an embodiment, a processor-readable storage medium having a computer program stored thereon is provided, the computer program is used to cause a processor to implement the steps in the above-mentioned method embodiments.

In an embodiment, a computer program product is provided, including a computer program, the computer program is used to cause a processor to implement the steps in the above-mentioned method embodiments.

The processor-readable storage medium may be any available medium or data storage device that can be accessed by the processor, including but not limited to a magnetic storage (such as floppy disk, hard disk, magnetic tape, magneto-optical disk (MO)), an optical storage (such as compact disc (CD), a digital versatile disc (DVD), a blue-ray disc (BD), a high-definition versatile disc (HVD)), and a semiconductor memory (such as ROM, EPROM, EEPROM, nonvolatile memory (NAND FLASH), solid-state drive (SSD)), etc.

A person skilled in the art should understand that the embodiments of this disclosure may be provided as methods, systems, or computer program products. Therefore, this disclosure may adopt the form of complete hardware embodiments, complete software embodiments, or embodiments combining software and hardware aspects. Moreover, this disclosure may adopt the form of a computer program product implemented on one or more computer usable storage medium (including but not limited to a disk storage, an optical storage, etc.) containing computer usable program code.

This disclosure is described with reference to flowcharts and/or block diagrams of methods, devices (systems), and computer program products according to the embodiments of this disclosure. It should be understood that each process and/or block in the flowchart and/or block diagram, and the combination of processes and/or blocks in the flowchart and/or block diagram may be implemented by computer executable instructions. These computer executable instructions may be provided to a general-purpose computer, a special-purpose computer, an embedded processor, or a processor of other programmable data processing device to generate a machine, so that a device, which is configured to implement functions specified in one process or multiple processes in the flowchart and/or one block or multiple blocks in the block diagram, is generated through the instructions executed by the computer or the processor of other programmable data processing device.

These processor executable instructions may be stored in a processor readable memory that may guide a computer or other programmable data processing device to operate in a specific manner, so that the instructions stored in the processor readable memory generate a product including an instruction device. The instruction device implements the functions specified in one process or multiple processes in the flowchart and/or one block or multiple blocks in the block diagram.

Apparently, a person skilled in the art may make various modifications and variations to this disclosure, without departing from the spirit and scope of this disclosure. In this case, if the modifications and variations of this disclosure fall within the scope of the claims of this disclosure and their equivalent techniques, this disclosure is intended to include these modifications and variations.

It should be appreciated that the above embodiments are only used to illustrate the technical solutions of this disclosure, but shall not be construed as limiting this disclosure. As can be appreciated by a person skilled in the art, although this disclosure has been described in detail with reference to the foregoing embodiments, any modifications of the technical solutions in the aforementioned embodiments, or equivalent replacements of part of the technical features within the scope of the disclosed technology, may still be made by a person skilled in the art. These modifications or replacements do not make the essence of the corresponding technical solutions depart from the scope of the technical solutions of the embodiments of this disclosure and should be encompassed within the scope of the claims and the specification of this disclosure. In particular, as long as there is no structural conflict, the various technical features mentioned in the various embodiments can be combined in any way. This disclosure is not limited to the specific embodiments disclosed herein, but includes all technical solutions falling within the scope of the claims.

## Claims

1. A communication method, applied to a terminal, comprising:
sending a network connection request to a satellite, wherein the network connection request is used for the terminal to establish a network connection with the satellite; and
receiving a target response message returned to the terminal by a device on the satellite.

2. The method according to claim 1, wherein the network connection request comprises a capability of supporting store-and-forward and a terminal identifier.

3. The method according to claim 2, wherein receiving the target response message returned to the terminal by the device on the satellite comprises:
receiving a first request accept response message returned to the terminal by the device on the satellite, wherein the first request accept response message carries an on-board store-and-forward data retention period and an on-board store-and-forward data storage quota, and the first request accept response message is generated by the satellite after determining that the terminal is in a network-accessible state based on the terminal identifier and the capability of supporting store-and-forward.

4. The method according to claim 1, wherein the network connection request comprises a capability of supporting store-and-forward and a terminal identifier, and receiving the target response message returned to the terminal by the device on the satellite comprises:
receiving a second request accept response message returned to the terminal by the device on the satellite, wherein the second request accept response message carries an on-board store-and-forward data retention period and an on-board store-and-forward data storage quota, and the second request accept response message is generated by the satellite after determining that the terminal is in a limited transmission state based on a second configuration policy, the terminal identifier, and the capability of supporting store-and-forward.

5. The method according to claim 1, wherein the network connection request comprises a capability of supporting store-and-forward, and receiving the target response message returned to the terminal by the device on the satellite comprises:
receiving a request suspend response message returned to the terminal by the device on the satellite, wherein the request suspend response message is generated by the device on the satellite based on the satellite being in a store-and-forward mode, the terminal meeting a condition of initial access to the satellite, and the terminal having the capability of supporting store-and-forward; and the request suspend response message carries a satellite identifier.

6. The method according to claim 1, wherein the network connection request comprises a capability of supporting store-and-forward, and receiving the target response message returned to the terminal by the device on the satellite comprises:
receiving a reject response message returned to the terminal by the device on the satellite, wherein the reject response message is generated by the device on the satellite based on the satellite being in a store-and-forward mode, the terminal meeting a condition of initial access to the satellite, and the terminal having the capability of supporting store-and-forward; the reject response message carries a reject reason message and a satellite identifier.

7. The method according to any one of claims 1 to 4, wherein the target response message further carries a satellite identifier and a bearer identity (ID).

8. The method according to claim 5 or 6, wherein the target response message further carries a satellite return time.

9. The method according to claim 1, wherein before sending the network connection request to the satellite, the method further comprises:
receiving a satellite broadcast message.

10. The method according to claim 9, wherein the satellite broadcast message carries a store-and-forward feature and/or a satellite identifier.

11. The method according to claim 3 or 4, further comprising:
sending to-be-transmitted data that meets the on-board store-and-forward data storage quota to the satellite.

12. A communication method, applied to a satellite, comprising:
receiving a network connection request sent by a terminal, wherein the network connection request is used to instruct the terminal to establish a network connection with the satellite; and
generating a target response message based on the network connection request, and returning the target response message to the terminal.

13. The method according to claim 12, wherein the network connection request carries a terminal identifier and a capability of supporting store-and-forward.

14. The method according to claim 13, wherein generating the target response message based on the network connection request, and returning the target response message to the terminal comprises:
determining that the terminal is in a network accessible state based on the terminal identifier and the capability of supporting store-and-forward, determining an on-board store-and-forward data retention period based on an available time of satellite coverage, and determining an on-board store-and-forward data storage quota; and
returning a first request accept response message to the terminal, wherein the first request accept response message carries the on-board store-and-forward data retention period and the on-board store-and-forward data storage quota.

15. The method according to claim 13, further comprising:
forwarding to-be-transmitted data in a case where the satellite covers a gateway station and receives the to-be-transmitted data sent by the terminal that meets a data storage quota.

16. The method according to claim 15, wherein forwarding the to-be-transmitted data in a case where the satellite covers the gateway station and receives the to-be-transmitted data sent by the terminal that meets the data storage quota comprises:
authenticating the terminal in a case where the satellite covers the gateway station and receives the to-be-transmitted data sent by the terminal that meets the data storage quota; and
forwarding the to-be-transmitted data when it is determined that the terminal passes the authentication.

17. The method according to claim 12, wherein the network connection request carries a terminal identifier and a capability of supporting store-and-forward, and generating the target response message based on the network connection request, and returning the target response message to the terminal comprises:
determining, based on a second configuration policy, the terminal identifier, and the capability of supporting store-and-forward, that the terminal is in a limited transmission state, determining an on-board store-and-forward data retention period based on an available time of satellite coverage, and determining an on-board store-and-forward data storage quota; and
returning a second request accept response message to the terminal, wherein the second request accept response message carries the on-board store-and-forward data retention period and the on-board store-and-forward data storage quota.

18. The method according to claim 17, further comprising:
obtaining subscription information of the terminal in a case where the satellite covers the gateway station; and
forwarding to-be-transmitted data and updating the limited transmission state of the terminal to an unlimited transmission state when it is determined that the terminal passes authentication based on the subscription information and the to-be-transmitted data sent by the terminal that meets the on-board store-and-forward data storage quota is received.

19. The method according to claim 18, further comprising:
sending a state update message to the terminal when it is detected that the terminal falls within a coverage of the satellite, wherein the state update message is used to indicate that the limited transmission state of the terminal is updated to the unlimited transmission state.

20. The method according to claim 13 or 17, wherein the target response message further carries a satellite identifier and a bearer identity (ID).

21. The method according to claim 12, wherein generating the target response message based on the network connection request, and returning the target response message to the terminal comprises:
generating a request suspend response message based on the satellite being in a store-and-forward mode, the terminal meeting a condition of initial access to the satellite, and the terminal having the capability of supporting store-and-forward; and
returning the request suspend response message to the terminal, wherein the request suspend response message carries a satellite identifier.

22. The method according to claim 12, wherein generating the target response message based on the network connection request, and returning the target response message to the terminal comprises:
generating a reject response message based on the satellite being in a store-and-forward mode, the terminal meeting a condition of initial access to the satellite, and the terminal having the capability of supporting store-and-forward; and
returning the reject response message to the terminal, wherein the reject response message carries a reject reason message and a satellite identifier.

23. The method according to claim 12, further comprising:
sending a broadcast message, wherein the broadcast message is used to instruct the terminal to connect to the satellite.

24. The method according to claim 23, wherein the broadcast message comprises a store-and-forward feature and/or a satellite identifier.

25. The method according to claim 21 or 22, wherein the target response message further carries a satellite return time.

26. A communication device, applied to a terminal, comprising:
a first sending unit, configured to send a network connection request to a satellite, wherein the network connection request is used to instruct the terminal to establish a network connection with the satellite; and
a first receiving unit, configured to receive a target response message returned to the terminal by a device on the satellite.

27. A communication device, applied to a satellite, comprising:
a second receiving unit, configured to receive a network connection request sent by a terminal, wherein the network connection request is used to instruct the terminal to establish a network connection with the satellite; and
a second sending unit, configured to generate a target response message based on the network connection request, and return the target response message to the terminal.

28. A communication device, comprising a memory, a transceiver, and a processor;
wherein the memory is configured to store a computer program, the transceiver is configured to transmit and receive data under control of the processor, and the processor is configured to read the computer program in the memory and perform the method according to any one of claims 1 to 25.

29. A computer-readable storage medium, wherein the computer-readable storage medium stores a computer program, and the computer program is used to cause a processor to perform the method according to any one of claims 1 to 25.
